# EUROPEAN PATENT APPLICATION

(11) **EP 3 879 891 A1**
(43) Date of publication of application: **15.09.2021**
(21) Application number: 19896641.8
(22) Date of filing: 06.12.2019
(51) Int. Cl.: H04W 56/00

(54) **ELECTRONIC DEVICE, WIRELESS COMMUNICATION METHOD, AND COMPUTER READABLE MEDIUM**

(30) Priority: 13.12.2018 CN 201811524640
(71) Applicant: Sony Group Corporation, Tokyo 108-0075 (JP)
(72) Inventor: TAO, Xiaofeng, Beijing 100876 (CN); ZHU, Min, Beijing 100876 (CN); GUO, Xin, Beijing 100028 (CN); GAO, Lei, Beijing 100876 (CN); PENG, Zhaoqi, Beijing 100876 (CN); HOU, Yanzhao, Beijing 100876 (CN)
(74) Representative: D Young & Co LLP
(86) International application number: PCT/CN2019/123596
(87) International publication number: WO 2020/119598

(57) **Abstract**

The present disclosure relates to an electronic device, a wireless communication method, and a computer readable medium. The electronic device for wireless communication according to an embodiment comprises a processing circuit. The processing circuit is configured to perform control so as to receive indication information from a first user apparatus, the indication information being related to a sidelink bandwidth part (SL-BWP) for data transmission. The processing circuit is further configured to perform, on the basis of the indication information, an operation for performing sidelink communication with the first user apparatus.

## Description

### FIELD

The present disclosure generally relates to the field of wireless communications, and in particular to an electronic device for wireless communication and a wireless communication method, and a computer readable medium.

### BACKGROUND

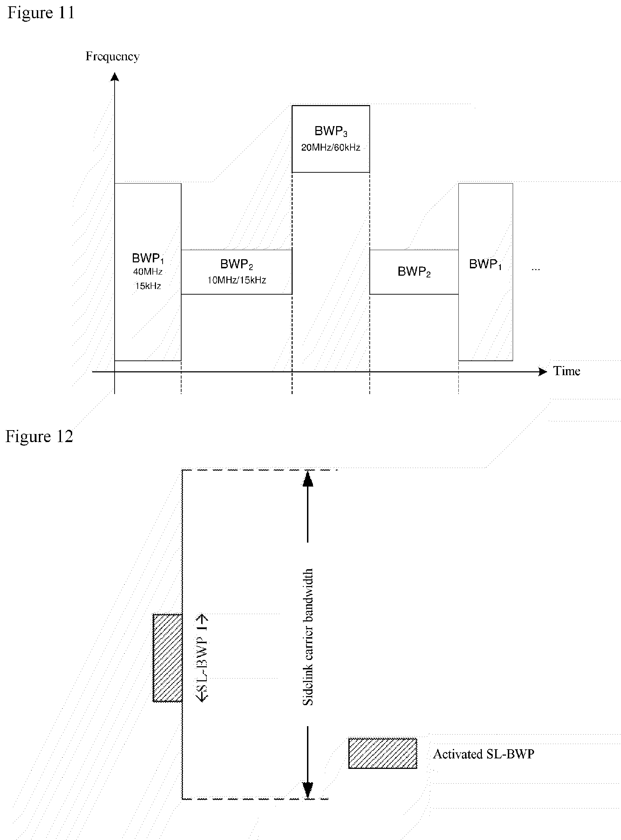

A bandwidth part (BWP) is defined in TS 38.211 of 3GPP (that is, third generation partner project). The BWP is a set of continuous resource blocks. Users can only activate one BWP configuration for a given time period, and cannot transmit or receive information on resources other than the activated BWP. As an example, three BWPs are configured in the scenario shown in Figure 11. BWPi has a width of 40MHz and a subcarrier spacing of 15KHz, BWP₂ has a width of 10MHz and a subcarrier spacing of 15KHz, and BWP₃ has a width of 20MHz and a subcarrier spacing of 60KHZ.

### SUMMARY

Brief summary of embodiments of the present disclosure is given hereinafter, to provide basic understanding for certain aspects of the present disclosure. It should be understood that, the summary is not exhaustive summary of the present disclosure. The summary is not intended to determine key parts or important parts of the present disclosure, and is not intended to limit the scope of the present disclosure. An object of the summary is only to give some concepts of the present disclosure in a simplified form, as preamble of the detailed description later.

An electronic device for wireless communication is provided according to an embodiment. The electronic device includes a processing circuit. The processing circuit is configured to: perform control to receive indication information from a first user equipment, the indication information being related to a sidelink bandwidth part SL-BWP for data transmission. The processing circuit is further configured to: perform, based on the indication information, an operation for performing sidelink communication with the first user equipment.

A wireless communication method is provided according to another embodiment. The wireless communication method includes: receiving indication information from a first user equipment, the indication information being related to a SL-BWP for data transmission. The method further includes performing, based on the indication information, an operation for performing sidelink communication with the first user equipment.

An electronic device for wireless communication is provided according to another embodiment. The electronic device includes a processing circuit. The processing circuit is configured to: perform control to send indication information to a second user equipment, the indication information being related to a sidelink bandwidth part SL-BWP for data transmission. The processing circuit is configured to: perform control to receive feedback information related to the indication information from the second user equipment; and perform, based on the feedback information, an operation for performing sidelink communication with the second user equipment.

A wireless communication method is provided according to another embodiment. The wireless communication method includes: sending, to a second user equipment, indication information. The indication information is related to a SL-BWP for data transmission. The method further includes: receiving feedback information related to the indication information from the second user equipment; and performing, based on the feedback information, an operation for performing sidelink communication with the second user equipment.

An electronic device for wireless communication is provided according to another embodiment. The electronic device includes a processing circuit. The processing circuit is configured to: perform control to receive, from a first user equipment, a request for a SL-BWP for data transmission corresponding to a second user equipment. The processing circuit is further configured to: perform control to send, to the first user equipment, feedback information on whether to allow the first user equipment to use the SL-BWP.

A wireless communication method is provided according to another embodiment. The wireless communication method includes: receiving, from a first user equipment, a request for a SL-BWP for data transmission corresponding to a second user equipment. The method further includes sending, to the first user equipment, feedback information on whether to allow the first user equipment to use the SL-BWP.

A computer readable medium is provided according to an embodiment of the present disclosure. The computer readable medium includes an executable instruction. When executed by an information processing apparatus, the executable instruction causes the information processing apparatus to implement the method according to the above embodiments.

According to the embodiments of the present disclosure, a coordination scheme of carrier configuration between users, so that a transmitter and a receiver using different carrier configurations can perform sidelink communication.

### BRIEF DESCRIPTION OF THE DRAWINGS

The present disclosure can be understood better with reference to the description given in conjunction with the drawings in the following. The same or similar element is indicated by the same or similar reference numeral throughput all the drawings. The drawings are included in the description together with the following detailed illustration and form a part of the description, and are used to further illustrate preferred embodiments of the present disclosure and explain principles and advantages of the present disclosure by examples. In the drawings:
Figure 1 is a block diagram showing a configuration example of an electronic device for wireless communication according to an embodiment of the present disclosure;
Figure 2 is a flowchart showing a process example of a wireless communication method according to an embodiment;
Figure 3 is a block diagram showing a configuration example of an electronic device for wireless communication according to an embodiment of the present disclosure;
Figure 4 is a flowchart showing a process example of a wireless communication method according to an embodiment;
Figure 5 is a block diagram showing a configuration example of an electronic device for wireless communication according to an embodiment of the present disclosure;
Figure 6 is a flowchart showing a process example of a wireless communication method according to an embodiment;
Figure 7 is a block diagram showing an exemplary structure of a computer for implementing the method and the device provided in the present disclosure;
Figure 8 is a block diagram showing a schematic configuration example of a smart phone to which the technology of the present disclosure may be applied;
Figure 9 is a block diagram showing a schematic configuration example of a gNB to which the technology of the present disclosure may be applied;
Figure 10 is a block diagram showing a schematic configuration example of a car navigation device to which the technology of the present disclosure may be applied;
Figure 11 is a schematic diagram for explaining a configuration example of a BWP;
Figure 12 is a schematic diagram for explaining a configuration example of a SL-BWP;
Figure 13 is a schematic diagram for explaining a configuration example of a SL-BWP;
Figure 14 is a signaling flow chart for explaining activation/deactivation of a SL-BWP; and
Figures 15 to 47 are signaling flow charts for explaining process examples of communication between user equipment (UE).

### DETAILED DESCRIPTION OF EMBODIMENTS

Hereinafter, embodiments of the present disclosure are described with reference to the drawings. Elements and features described in one drawing or one embodiment of the present disclosure may be combined with elements and features described in one or more other drawings or embodiments. It should be noted that, indication and description for components and processing which are not related to the present disclosure or well known for those skilled in the art are omitted in the drawings and illustrations for the sake of clarity.

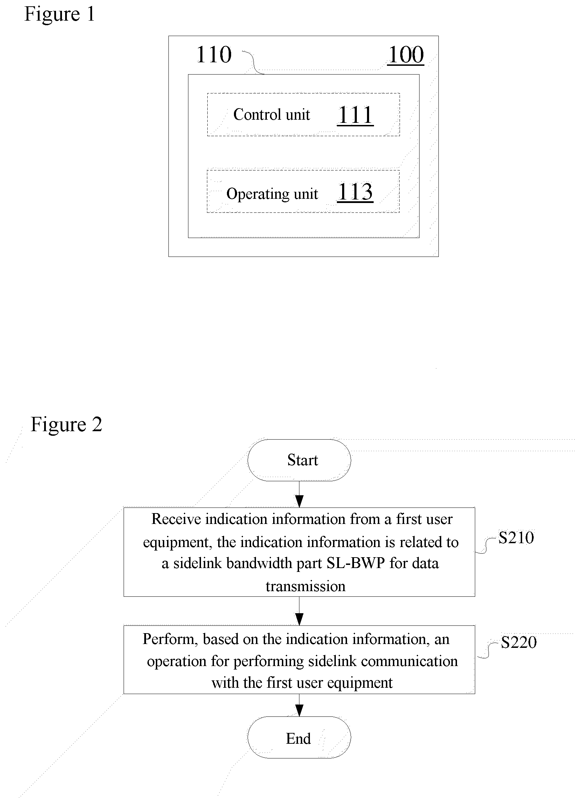

Hereinafter, reference is made to Figure 1 showing a configuration example of an electronic device for wireless communication according to an embodiment of the present disclosure. As shown in Figure 1, an electronic device 100 for wireless communication according to the embodiment includes a processing circuit 110. The processing circuit 110 may be implemented by, for example, a specific chip, a chipset or a central processing unit (CPU).

The electronic device according to the embodiment may be implemented, for example, at a user equipment side. User equipment may include, for example, a vehicle. The present disclosure is not limited thereto, but may be used in various application scenarios of a new radio (NR) sidelink, such as a machine type communication (MTC), device-to-device (D2D) communication, vehicle-to-device (V2X) communication, internet of things (IOT) communication, and the like. The V2X communication may include vehicle-to-vehicle (V2V) communication, vehicle-to-pedestrian (V2P) communication, vehicle-to-infrastructure (V2I) communication, and the like.

The processing circuit 110 includes a control unit 111 and an operating unit 113. It should be noted that, although the control unit 111 and the operating unit 113 are shown as functional blocks in Figure 1, it should be understood that functions of the units may be implemented by the processing circuit as a whole and are not necessarily implemented by discrete actual components in the processing circuit. In addition, although the processing circuit is shown by one block in Figure 1, the electronic device may include a plurality of processing circuits. The functions of the units may be distributed to the plurality of processing circuits, and are performed by the plurality of processing circuits in coordination with each other.

The control unit 111 is configured to perform control to receive indication information from a first user equipment, the indication information is related to a SL-BWP for data transmission.

The SL-BWP is a continuous physical resource set on a sidelink carrier. The physical resources in the SL-BWP may be configured according to a given SL-BWP configuration parameter. The SL-BWP is configured within the sidelink carrier, and a maximum bandwidth of the SL-BWP is less than a bandwidth of the carrier. In addition, a plurality of resource pools may be configured/pre-configured in the SL-BWP.

In a case that only one SL-BWP is configured within each sidelink carrier, users use a SL-BWP configuration configured within the carrier. UE can only transmit/receive information in the SL-BWP, but cannot transmit/receive information outside the SL-BWP, as shown in Figure 12. In this case, the SL-BWP configuration parameter may not include SL-BWP indexes. In a case that the user equipment is configured to receive/transmit information on a given carrier, a SL-BWP configuration within the carrier is used.

According to an embodiment, two or more SL-BWPs are configured within each sidelink carrier, and one of the two or more SL-BWPs is activated.

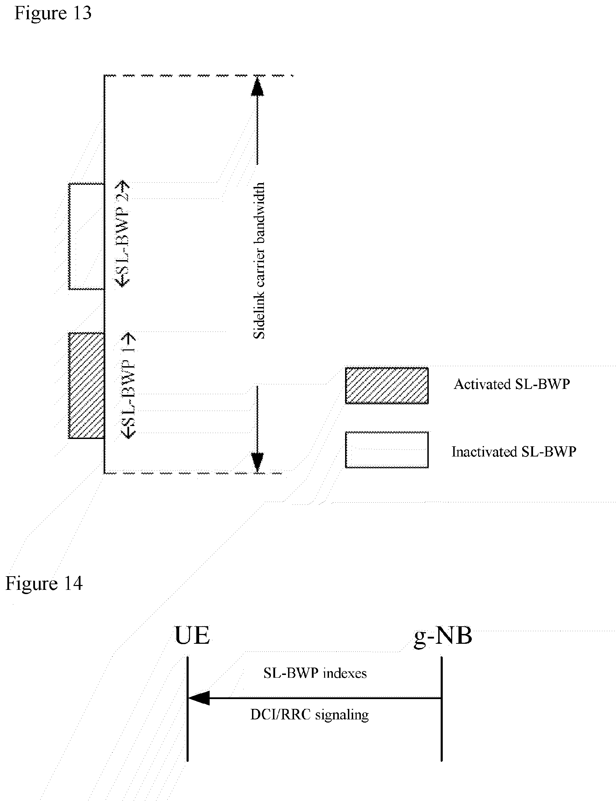

In a case that more than one SL-BWPs are configured within each sidelink carrier and one of SL-BWP configurations is activated, UE can only transmit/receive information in the activated SL-BWP, but cannot transmit/receive information outside the activated SL-BWP, as shown in Figure 13.

The system can configure n SL-BWP configurations for user equipment within the sidelink carrier, where 1<n≤N. N represents a maximum number of SL-BWPs that can be configured by the system within the sidelink carrier, and may be configured by the system. Each SL-BWP configuration may be uniquely indicated by the SL-BWP indexes. As shown in Figure 14, the system can activate/de-activate the SL-BWP for users by downlink control information (DCI) or radio resource control (RRC) signaling. Each sidelink carrier has only one activated SL-BWP, and remaining SL-BWPs are not activated. User equipment can only transmit/receive information on the SL-BWP within the carrier.

According to an embodiment, indication information related to a SL-BWP for data transmission may include configuration information of the SL-BWP. The configuration information may include, for example, a subcarrier spacing, a cyclic prefix (CP), a physical resource block offset (for example, an offset relative to a starting physical resource block (PRB) within the carrier), and a bandwidth of the SL-BWP (for example, the number of continuous PRB). In addition, in a case that a plurality of SL-BWPs are allowed to be configured within the sidelink carrier, the configuration information may further include the SL-BWP indexes. Alternatively, the configuration information may further include effective time of the SL-BWP (for example, a timer).

The configuration information may be configured by system information, the radio resource control signaling, geographic location-based selection, or may be pre-configured.

In addition, the configuration information may be UE-specific, Cell-specific, Zone-specific or Carrier-specific.

In a case that the configuration information is UE-specific, the system may configure a SL-BWP for user equipment in a RRC_CONNECTED state, and a configuration parameter of the SL-BWP may be configured according to user requirements.

In a case that the configuration information is Cell-specific, the system may configure a SL-BWP for user equipment in the RRC_CONNECTED state, and a configuration parameter of the SL-BWP may be configured according to a base station connected to the user equipment. That is, user equipment covered by a same base station has a same SL-BWP configuration within a same sidelink carrier.

In a case that the configuration information is Zone-specific, the system may acquire zone information according to geographic location of the user, and configure a SL-BWP according to the acquired zone information. That is, users in a same zone have a same SL-BWP configuration mode within a same sidelink carrier.

In a case that the configuration information is Carrier-specific, the system may configure a SL-BWP according to the sidelink carrier used by the user equipment to transmit/receive. That is, users have a same SL-BWP configuration mode within a same sidelink carrier.

In addition, the indication information from the first user equipment may be received by a SL-BWP within a carrier (hereinafter referred to as a common carrier or a first carrier) shared by a plurality of user equipment. The SL-BWP within the common carrier is a common resource for a plurality of user equipment. If the user equipment supports multi-carrier communication, the common carrier may always be in a communicable state. That is, there is no an activated/de-activated indication within the carrier. The SL-BWP within the carrier may be used at any time, and is not necessary to be configured in a case that the SL-BWP is used.

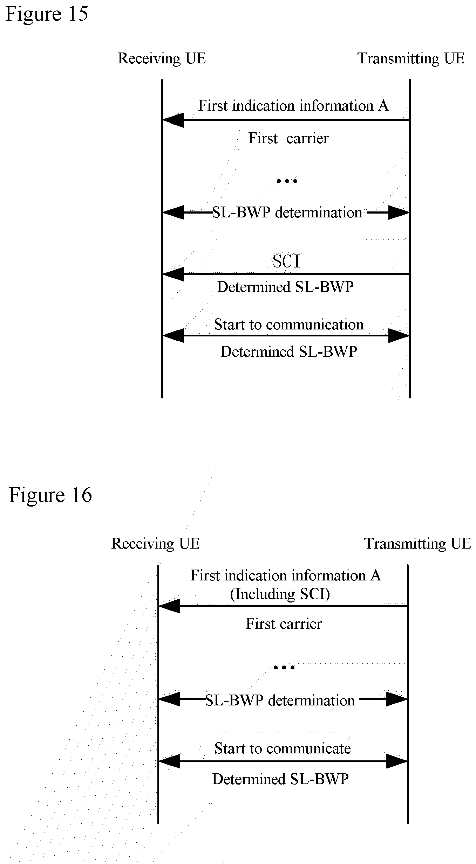

The SL-BWP within the common carrier may be configured by the system information, the RRC signaling, geographic location-based, or may be pre-configured. SL-BWP configurations within the common carrier are the same for all user equipment. The SL-BWP within the common carrier may be used for broadcast, unicast and multicast communication. As shown in Figure 16 below, for the communication (broadcast, unicast and multicast) within the common carrier, transmitting user equipment may directly send sidelink control information (SCI) to communicate with receiving user equipment without independently sending the indication information in advance. In other words, two SL-BWP configuration modes can be used. A first mode is that SL-BWP and SCI are sent together within the common carrier, and data is sent within a non-common carrier. A second mode is that the SL-BWP configuration is sent within the common carrier, and then the SCI and the data is sent within the non-common carrier after the SL-BWP configuration is successful between two parties.

A carrier other than the common carrier may be referred to as the non-common carrier (or a second carrier). The non-common carrier may be configured according to requirements of transmission/reception information of the user equipment. A SL-BWP configuration within the non-common carrier may be the UE-specific, the Cell-specific, the Zone-specific or the Carrier-specific. The SL-BWP configuration within the non-common carrier may be configured by the system information, the RRC signaling, geographic location -based, or may be pre-configured. The SL-BWP within the non-common carrier may be used for broadcast, unicast or multicast communication.

Referring to Figure 1, the operating unit 113 is configured to perform, based on the received indication information (hereinafter referred to as a first indication information), an operation for performing sidelink communication with the first user equipment.

According to an embodiment, the operation for performing sidelink communication may include determining, based on the first indication information and a SL-BWP configuration of a current user equipment, whether the current user equipment is capable of performing sidelink communication using a SL-BWP of the first user equipment.

Upon determination of being capable of performing sidelink communication using the SL-BWP of the first user equipment, the operating unit 113 may control the current user equipment to perform sidelink communication with the first user equipment using the SL-BWP of the first user equipment.

In addition, upon determination of not being capable of performing sidelink communication using the SL-BWP of the first user equipment, the operating unit 113 may perform control to send information (hereinafter referred to as a second indication information) related to the SL-BWP of the current user equipment to the first user equipment, or perform control to request, to a serving base station of the current user equipment, a SL-BWP corresponding to the SL-BWP of the first user equipment.

The indication information from the first user equipment and the information related to the SL-BWP of the current user equipment may be transmitted by the SL-BWP within the common carrier (the first carrier). In addition, upon determination of not being capable of performing sidelink communication using the SL-BWP of the first user equipment, the SL-BWP within the common carrier may be used for performing sidelink communication with the first user equipment.

Next, an example process of transmitting the first indication information between user equipment is described with reference to Figures 15 and 16.

As show in Figure 15, the transmitting UE and the receiving UE transmit/receive a first indication information A on the SL-BWP within the first carrier to complete a SL-BWP configuration process of both the transmitter and the receiver. Next, the transmitting UE sends SCI on a SL-BWP determined by both the transmitting UE and the receiving UE, and the transmitting UE starts to communicate with the receiving UE.

The transmitting UE may configure the first indication information A according to the SL-BWP information configured by an upper layer for to-be-transmitted information. An information domain of the first indication information A may include a configuration parameter of a SL-BWP within the second carrier, for example, a subcarrier spacing, a CP, a frequency location, a bandwidth, sidelink carrier information, a source UE identity (ID), an objective UE ID (that may be empty) and a transmission request.

For a SL-BWP configuration of the transmitting UE, for UE in a Mode-1 (that is, an auxiliary mode with a base station), the base station may configure a SL-BWP within the sidelink carrier for the UE according to requirements of the transmission service of the UE. For UE in a Mode-2 (that is, an auxiliary mode without a base station), for example, the UE may independently select a SL-BWP according to requirements of the transmission service and resources. For the case that only one SL-BWP is configured within the carrier, the UE independently selects a transmission carrier and then uses the SL-BWP within the carrier. For the case that a plurality of SL-BWPs are configured within one carrier, the UE may independently select a transmission carrier and a SL-BWP within the carrier.

Figure 16 shows an alternative method of transmitting the first indication information. As shown in Figure 16, the transmitting UE sends a first indication information B to the receiving UE on the SL-BWP within the first carrier. Next, the transmitting UE and the receiving UE start to perform data transmission on the SL-BWP determined by both the transmitting UE and the receiving UE.

The first indication information B is SL-BWP information and sidelink control information (SCI) configured by the transmitting UE for the to-be-transmitted information according to the upper layer. An information domain of the first indication information B may include the configuration parameter of the SL-BWP within the second carrier, for example, the subcarrier spacing, the CP, the frequency location, the bandwidth, the sidelink carrier frequency, a source UE identity (ID), an objective UE ID (that may be empty), a transmission request and SCI information (including, for example, a transmission service priority, a resource reservation, a frequency domain resource location of initial transmission and retransmission, a time interval of initial transmission and retransmission, a mode of modulation and coding, retransmission indexes).

For the SL-BWP configuration of the transmitting UE, for the UE in the Mode-1, the base station may configure a SL-BWP within the sidelink carrier and transmission resources in the SL-BWP for the UE according to requirements of the transmission service of the UE. For the UE in the Mode-2 as described above, the UE may independently select the SL-BWP and transmission resources in the SL-BWP according to requirements of the transmission service and resources.

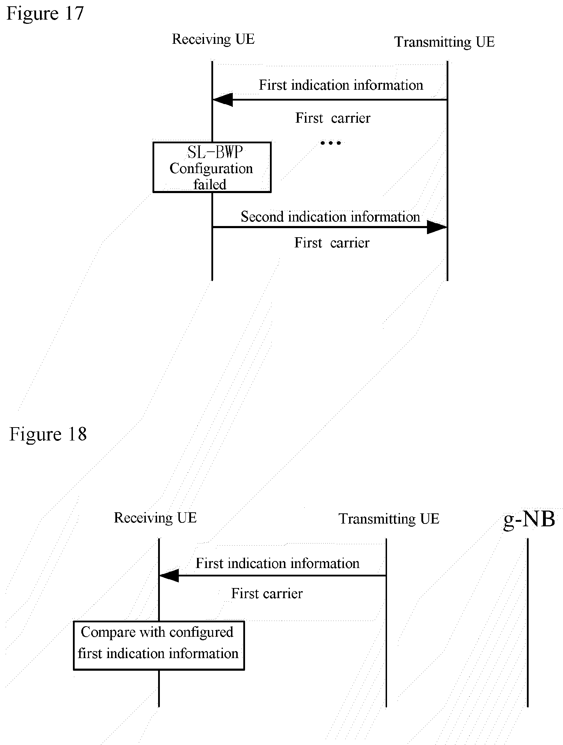

Next, an example process of transmitting the second indication information between user equipment is described with reference to Figure 17.

As shown in Figure 17, the receiving UE cannot receive information in the SL-BWP indicated by the first indication information. Next, the receiving UE sends the second indication information to the transmitting UE within the first carrier, to send, to the transmitting UE, a SL-BWP configuration that the receiving UE can receive.

The second indication information is sent from the receiving UE to the transmitting UE to indicate a specified SL-BWP configuration in which the receiving UE can receive information. An information domain of the second indication information may include a configuration parameter of the SL-BWP, for example, a subcarrier spacing, a CP, a frequency location, a bandwidth, a sidelink carrier frequency, a source UE ID, an objective UE ID.

As described above, a single carrier may have one SL-BWP configuration or a plurality of SL-BWP configurations. Next, exemplary embodiments are described for one SL-BWP configured within the carrier and a plurality of SL-BWPs configured within the carrier, respectively.

The exemplary embodiments are described hereinafter in the following order.
A. One SL-BWP is configured within the carrier.
   1. UE-specific
   2. Cell-specific
   3. Zone-specific
   4. Carrier-specific
B. A plurality of SL-BWPs are configured within the carrier
   1. UE-specific
   2. Cell-specific
   3. Zone-specific
   4. Carrier-specific

Next, an exemplary embodiment in the case of one SL-BWP is configured within the carrier is described first.

### A. One SL-BWP is configured within the carrier.

In this case, the transmitting UE performs data transmission on the SL-BWP within the second carrier. For the UE in the Mode-1, before receiving the first indication information, the SL-BWP is configured within the no carriers, and the system only configures one SL-BWP within each carrier, where 0<n₀≤N₀. N₀ represents a maximum number of a configurable carrier. For the UE in the Mode-2, only one SL-BWP is allowed to be configured/pre-configured within each carrier. The SL-BWP may be pre-configured by the base station, may be configured based on geographic location, or may be pre-configured.

### 1. UE-specific

In the case that the configuration information is UE-specific, the first indication information indicates the configuration parameter of the SL-BWP, including at least the sidelink carrier frequency, the subcarrier spacing, the CP, the frequency location and the bandwidth. A SL-BWP configuration request indicates the configuration parameter of the SL-BWP, including at least the sidelink carrier frequency, the subcarrier spacing, the CP, the frequency location and the bandwidth. The second indication information includes at least the sidelink carrier frequency, the subcarrier spacing, the CP, the frequency location and the bandwidth.

In the case of the UE-specific, Figures 18 to 27 show process examples of communication with the base station.

Figure 18 shows a process example in which the receiving UE receives the first indication information. As shown in Figure 18, the transmitting UE sends the first indication information within the first carrier. Next, the receiving UE monitors the first indication information within the first carrier and decodes contents of the first indication information. The receiving UE compares a SL-BWP configuration mode in the decoded first indication information with a configured SL-BWP configuration mode within the carrier, and comparison results may include the following cases. One case is that the SL-BWP is configured within the carrier, the configured SL-BWP is partially overlapped with the SL-BWP indicated in the first indication information, and meets current transmission requirements. Other cases include that the SL-BWP is not configured within the carrier, and the SL-BWP within the carrier does not meet the transmission requirements.

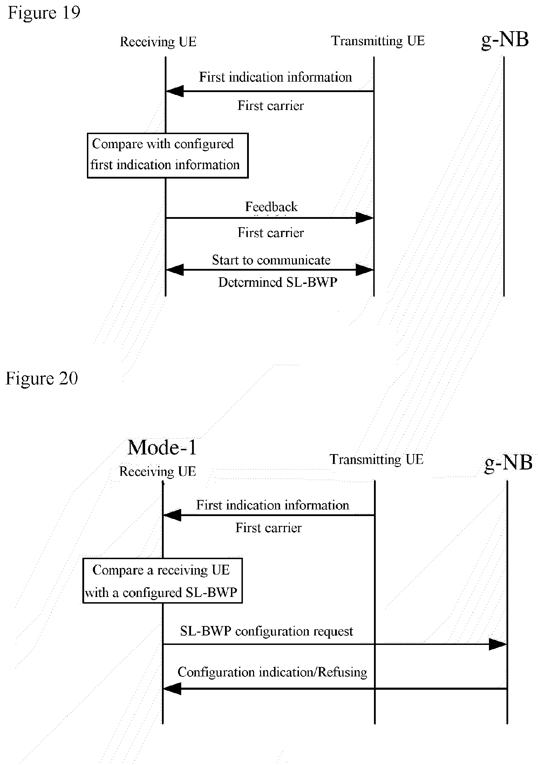

Further, Figure 19 shows a process example of a receiving UE side in a case of meeting the transmission requirements.

As shown in Figure 19, the receiving UE feeds back SL-BWP configuration completion information within the first carrier. Next, the transmitting UE and the receiving UE start to communicate on a given SL-BWP

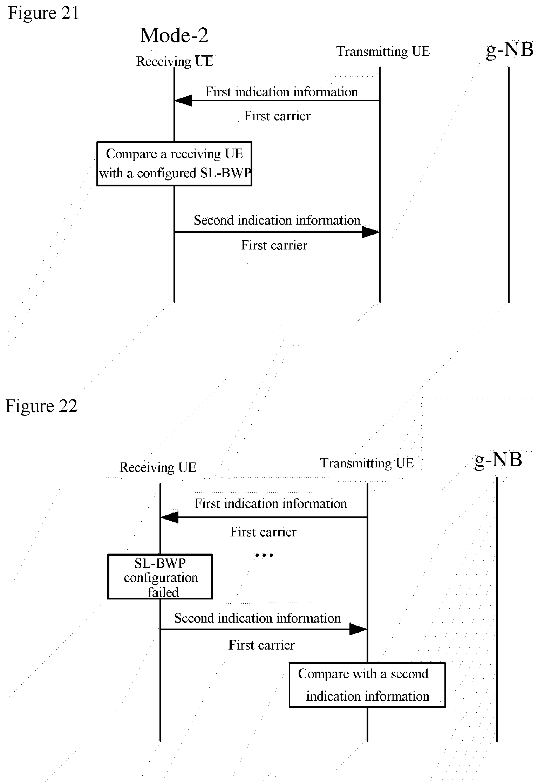

Figures 20 and 21 show process examples of a receiving UE side in a case of not meeting the transmission requirements, which respectively correspond to receiving UE in the MODE-1 and receiving UE in the Mode-2.

As shown in Figure 20, the receiving UE in the MODE-1 sends the SL-BWP configuration request to the base station. If the base station agrees with the SL-BWP configuration request, the base station configures the SL-BWP for the receiving UE. If the base station refuses the SL-BWP configuration request, the receiving UE sends the second indication information to the transmitting UE.

As shown in Figure 21, the receiving UE in the MODE-2 sends the second indication information to the transmitting UE.

Figure 22 shows a process example in which the transmitting UE receives the second indication information. As shown in Figure 22, the receiving UE sends the second indication information within the first carrier. The transmitting UE receives the second indication information within the first carrier and decodes the contents of the second indication information. The transmitting UE compares a SL-BWP configuration mode in the decoded second indication information with a SL-BWP configuration mode within the carrier, and comparison results may include the following two cases. One case is that the SL-BWP is configured within the carrier, the configured SL-BWP is partially overlapped with the SL-BWP indicated in the second indication information, and meets current transmission requirements. Other cases include that the SL-BWP is not configured within the carrier, and the configured SL-BWP does not meet the transmission requirements.

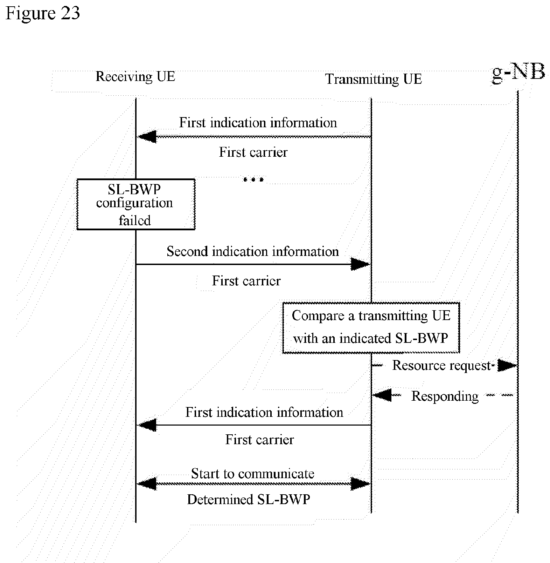

Next, a process example of a transmitting UE side in the case of meeting the transmission requirements is described with reference to Figure 23.

In a case that the transmitting UE uses the first indication information A with reference to Figure 15 described above, as shown in Figure 23 (not including a dotted line arrow part), the transmitting UE adjusts information to transmit according to the second indication information, and sends, to the receiving UE, a new first indication information. The receiving UE receives the new first indication information to start to communicate.

Alternately, in a case that the transmitting UE uses the first indication information B with reference to Figure 16 described above, as shown in Figure 23, the transmitting UE adjusts information to transmit according to the second indication information. The transmitting UE in the MODE-1 may send, to the base station, resource request information (the dotted line arrow part as shown in Figure 23). The transmitting UE in the MODE-2 may independently select sending resources in the configured SL-BWP. If transmission resources are configured successfully, a new first indication information is sent to the receiving UE to start to communicate.

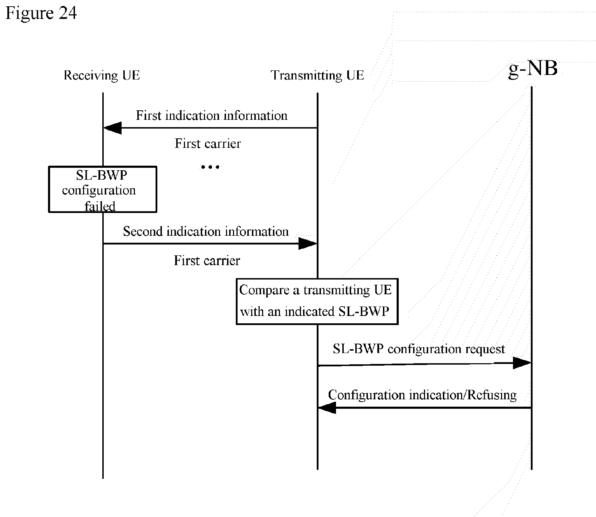

Next, process examples of the transmitting UE side in a case of not meeting the transmission requirements are described with reference to Figures 24 to 27.

In a case that the transmitting UE uses the first indication information A with reference to Figure 15 described above, as shown in Figure 24, the transmitting UE in the MODE-1 sends a SL-BWP configuration request to the base station. If the base station sends a configuration indication, the transmitting UE performs subsequent processing of the transmitting UE according to the SL-BWP configured by the base station. If the base station refuses the configuration request and the SL-BWP within the first carrier meets the transmission service requirements, the transmitting UE configures the transmission on the SL-BWP within the first carrier. If the base station refuses the configuration request and the SL-BWP within the first carrier does not meet the transmission service requirements, the transmitting UE feeds back transmission end information to the receiving UE.

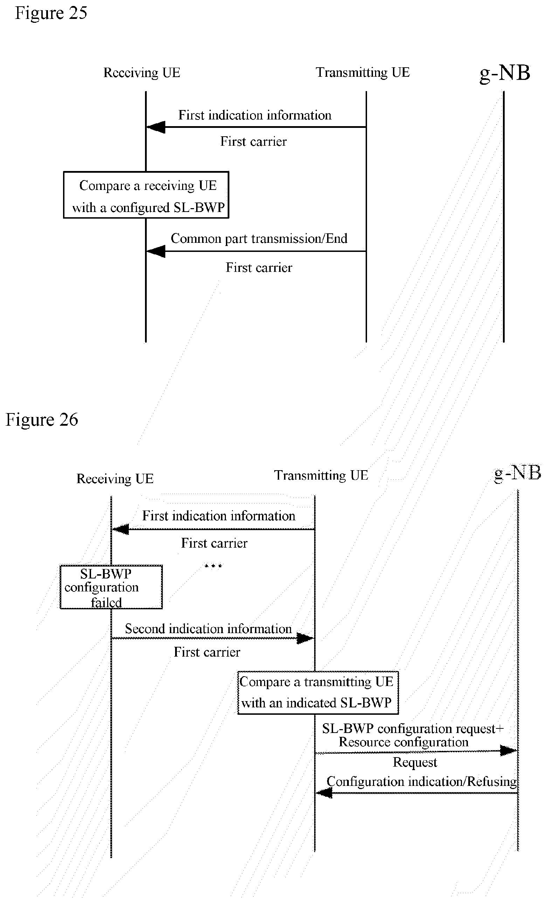

In addition, Figure 25 shows a process example of the transmitting UE in the MODE-2 in the above case. As shown in Figure 25, if the SL-BWP within the first carrier meets the transmission service requirements, the transmitting UE configures the transmission on the SL-BWP within the first carrier. If the SL-BWP within the first carrier does not meet the transmission service requirements, the transmitting UE feeds back the transmission end information to the receiving UE.

In a case that the transmitting UE uses the first indication information B with reference to Figure 16 described above, as shown in Figure 26, the transmitting UE in the MODE-1 sends a SL-BWP configuration request and a resource configuration request to the base station. If the base station sends the configuration instruction, the transmitting UE sends a new first indication information to the receiving UE according to the SL-BWP configured by the base station and resources, to start to communicate. If the base station refuses the configuration request, and the base station indicates a new transmission resource for the transmitting UE on the SL-BWP within the first carrier, the transmitting UE configures the transmission on the SL-BWP within the first carrier. If the base station refuses the configuration request and the SL-BWP within the first carrier does not meet the transmission service requirements, the transmitting UE feeds back the transmission end information to the receiving UE.

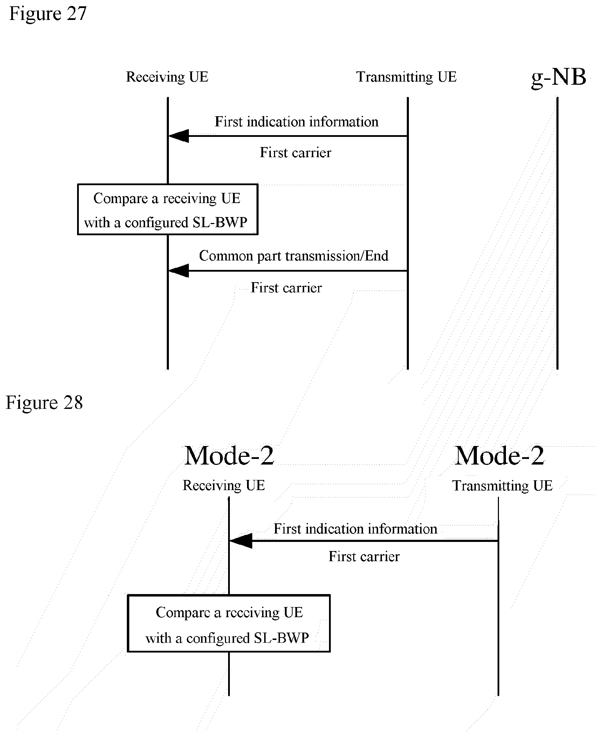

In addition, Figure 27 shows a process example of the transmitting UE in the MODE-2 in the above case. As shown in Figure 27, if the SL-BWP within the first carrier meets the transmission service requirements, the transmitting UE independently selects resources on the SL-BWP within the first carrier to start to transmit. If the SL-BWP within the first carrier does not meet the transmission service requirements, the transmitting UE feeds back the transmission end information to the receiving UE.

Next, process examples without the base station are described with reference to Figures 28 to 33.

Figure 28 shows a process example in which the receiving UE receives the first indication information. As shown in Figure 28, the transmitting UE sends the first indication information within the first carrier. The receiving UE monitors the first indication information within the first carrier and decodes contents of the first indication information. The receiving UE compares a SL-BWP configuration mode in the decoded first indication information with a configured SL-BWP configuration mode within the carrier, and comparison results may include the following cases. One case is that the SL-BWP is configured within the carrier, the SL-BWP is partially overlapped with the SL-BWP indicated in the first indication information, and meets current transmission requirements. Other cases include that SL-BWP configurations within the carriers are not same.

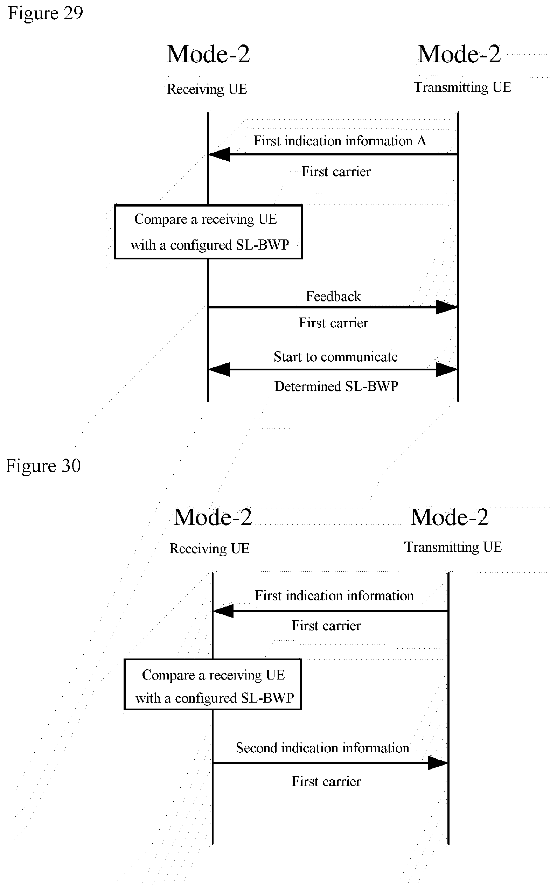

Figure 29 shows a process example of the transmitting UE in the case of meeting the transmission requirements. As shown in Figure 29, the receiving UE feeds back the SL-BWP configuration completion information within the first carrier. The transmitting UE and the receiving UE start to communicate on the given SL-BWP.

Figure 30 shows a process example of the receiving UE in a case of not meeting the transmission requirements. As shown in Figure 30, in this case, the receiving UE directly sends, to the transmitting UE, the send indication information.

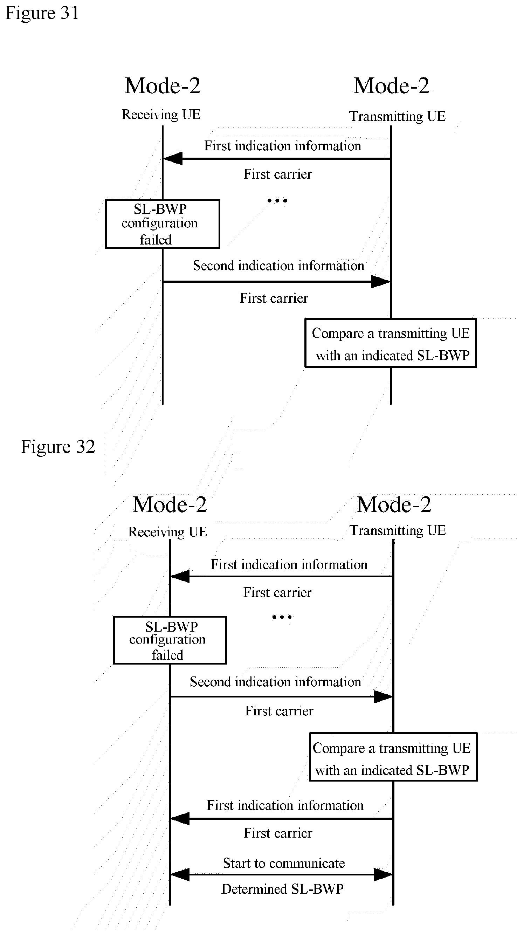

Figure 31 shows a process example in which the transmitting UE receives the second indication information. As shown in Figure 31, the receiving UE sends the second indication information within the first carrier. The transmitting UE receives the first indication information within the first carrier and decodes the contents of the second indication information. The transmitting UE compares the SL-BWP configuration mode in the decoded second indication information with the configured SL-BWP configuration mode within the carrier, and comparison results may include the following two cases. One case is that the SL-BWP is configured within the carrier, the configured SL-BWP is partially overlapped with the SL-BWP indicated in the second indication information, and meets current transmission requirements. Other cases include that the SL-BWP is not configured within the carrier, and the configured SL-BWP does not meet the transmission requirements.

Figure 32 shows a process example of the transmitting UE in the case of meeting the transmission requirements.

In the case that the transmitting UE uses the first indication information A with reference to Figure 15 described above, as shown in Figure 32, the transmitting UE adjusts information to transmit according to the second indication information, and sends a new first indication information to the receiving UE. The receiving UE receives the new first indication information to start to communicate.

In the case that the transmitting UE uses the first indication information B with reference to Figure 16 described above, as shown in Figure 32, the transmitting UE adjusts information to transmit according to the second indication information, and independently selects sending resources from the SL-BWP indicated by the second indication information. If transmission resources are configured successfully, new first indication information is sent to the receiving UE to start to communicate.

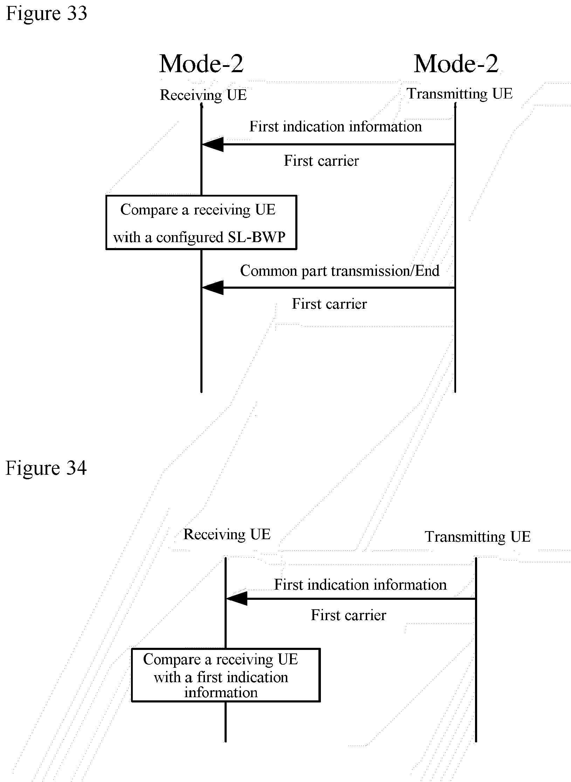

If the transmission resources are configured unsuccessfully, in the case that the transmitting UE uses the first indication information A with reference to Figure 15 described above, as shown in Figure 33, if the SL-BWP within the first carrier meets the transmission service requirements, the transmitting UE configures the transmission on the SL-BWP within the first carrier. If the SL-BWP within the first carrier does not meet the transmission service requirements, the transmitting UE feeds back the transmission end information to the receiving UE. In the case that the transmitting UE uses the first indication information B with reference to Figure 16 described above, if the SL-BWP within the first carrier does not meet the transmission service requirements, the transmitting UE independently selects resources on the SL-BWP within the first carrier, to start to communicate. If the SL-BWP within the first carrier does not meet the transmission service requirements, the transmitting UE feeds back the transmission end information to the receiving UE.

### 2. Cell-specific

Cell-specific refers to a same SL-BWP configuration within a same carrier in a same cell. In the case that the SL-BWP configuration is cell specific, information domains of a first instruction information, a second instruction information, a SL-BWP configuration request and a SL-BWP activation request may be, for example:
the first indication information indicating the configuration parameter of the SL-BWP, including at least a sidelink carrier frequency, a subcarrier spacing, a CP, a frequency location, a bandwidth and a cell identity (for example, last three digits);
the second indication information indicating the configuration parameter of the SL-BWP, including at least a sidelink carrier frequency, a subcarrier spacing, a CP, a frequency location, a bandwidth and a cell identity (for example, last three digits); and
the SL-BWP configuration request including at least the sidelink carrier frequency, the subcarrier spacing, the CP, the frequency location and the bandwidth.

For the cell identity, it should be noted that the cell identity for the UE in the Mode-2 may be a default value or empty, to determine whether a base station connected with the receiving is the same as a base station connected with the transmitting UE. In other words, according to the cell identity, it may be determined whether the transmitting UE and receiving UE belong to different cells or a same cell. In a case of the transmitting UE and the receiving UE belonging to the same cell without the base station, the configuration mode is the same as the configuration mode without the base station in the above UE-specific case. For the case that the transmitting UE and the receiving UE belong to different cells, the configuration mode is the same as the configuration mode with the base station in the above UE-specific case.

For the case that the transmitting UE and the receiving UE belong to a same cell, the SL-BWP configuration request may only include the sidelink carrier information, other parameters are optional.

Figure 34 shows a process example with the base station. As shown in Figure 34, the transmitting UE sends the first indication information within the first carrier. The receiving UE monitors the first indication information within the first carrier and decodes contents of the first indication information. According to cell identity information of the transmitting UE and the receiving UE, it is determined two cases that the receiving UE and the transmitting UE are in the same cell (the receiving UE and the transmitting UE are in the Mode-1 or the receiving and the transmitting UE are in the Mode-2) and the receiving UE and the transmitting UE are in different cells.

A process of SL-BWP coordination between UE in different cells is the same as a process of SL-BWP coordination in the case of the UE-specific. A process example of the SL-BWP coordination between UE in the same cell is described below.

According to the sidelink carrier information in the first indication information, the receiving UE may determine the following two cases: the receiving UE configuring a related sidelink carrier; and the receiving UE not configuring the related sidelink carrier.

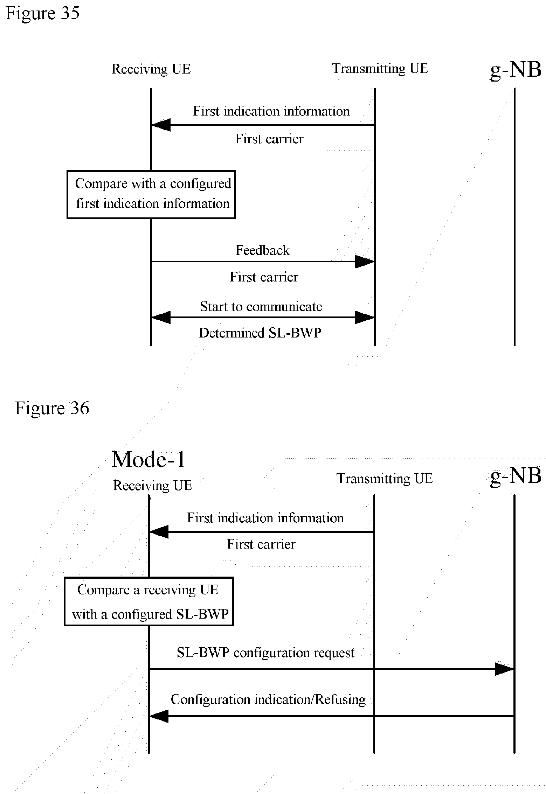

Figure 35 shows a process example in the case that the transmitting UE configures the related sidelink carrier. As shown in Figure 35, the transmitting UE feeds back SL-BWP configuration completion information within the first carrier. The transmitting UE and the receiving UE start to communicate on the given SL-BWP.

Figure 36 shows a process example in the case that the transmitting UE does not configure the related sidelink carrier. As shown in Figure 36, the receiving UE in the MODE-1 sends the SL-BWP configuration request to the base station. According to the SL-BWP configuration request sent by the receiving UE, the base station may configure a related carrier and a SL-BWP within the carrier for the receiving UE. The receiving UE performs a same process as shown in Figure 35.

The process without the base station is the same as the process of the UE-specific.

### 3. Zone-specific

The process in the case of the zone-pecific is similar to that in the case of the cell-pecific, with a difference that the cell identity information is changed to zone ID information. For UE communication in a same zone, a configuration mode may be the same as that in the case of cell-specific. For UE communication in different zones, the configuration mode may be the same as the above UE-specific configuration mode.

### 4. Carrier-specific

Cell-specific refers to a same SL-BWP configuration on all the UE within a same carrier. In this case, as long as carrier pairing is successful, the transmitting UE and the receiving UE can communicate. The first indication information includes at least the sidelink carrier information, and may not include the SL-BWP configuration information. The SL-BWP configuration request only includes the sidelink carrier information. The second indication information includes at least the sidelink carrier information, and may not include the SL-BWP configuration information.

The receiving UE receives the first indication information. According to the sidelink carrier information in the first indication information, there are the following two cases: the receiving UE configuring a related sidelink carrier; and the receiving UE not configuring the related sidelink carrier.

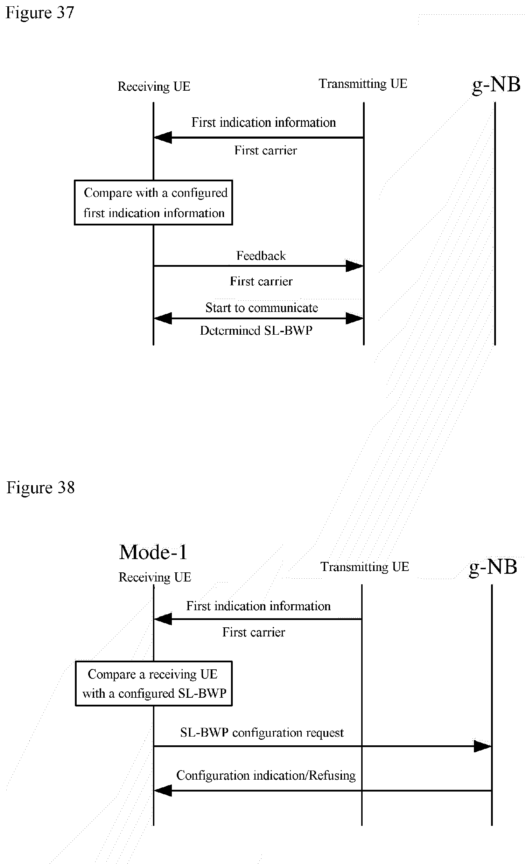

Figure 37 shows a process example in the case that the transmitting UE configures the related sidelink carrier. As shown in Figure 37, the receiving UE feeds back SL-BWP configuration completion information within the first carrier. The transmitting UE and the receiving UE start to communicate on the given SL-BWP.

Figure 38 shows a process example in the case that the transmitting UE does not configure the related sidelink carrier. As shown in Figure 38, the receiving UE in the MODE-1 sends, to the base station, the SL-BWP configuration request. According to the sidelink carrier information in the SL-BWP configuration request, the base station configures a SL-BWP within a related carrier. The receiving UE performs a same process as shown in Figure 37. For the receiving UE in the Mode-2, the communication starts within the related carrier according to the configuration information of the upper layer.

### B. A plurality of SL-BWPs are configured within the carrier.

Next, an exemplary embodiment in the case of a plurality of SL-BWP configurations within the carrier is described. In this case, the transmitting UE performs data transmission on the SL-BWP within the second carrier. For the UE in the Mode-1, before receiving the first indication information, the SL-BWPs are configured within the no (0<n₀≤N₀) carriers, and the system is allowed to configure a plurality of SL-BWPs within each carrier. For the UE in the Mode-2, a plurality of SL-BWPs are allowed to be configured/pre-configured within each carrier. The SL-BWP may be pre-configured by the base station, may be configured based on geographic location, or may be pre-configured. In this case, the first indication information, the second indication information, the SL-BWP configuration parameter in the SL-BWP configuration request may include SL-BWP indexes.

### 1. UE-specific

For the case of the UE-specific, the process is the same as that of UE-specific, and detailed description is omitted herein.

### 2. Cell-specific

The Cell-specific refers to a same SL-BWP configuration within a same carrier in a same cell. Both the receiving UE and the transmitting UE are in the Mode-1. The first instruction information and the second instruction information further include the Cell identity other than the information described above. The SL-BWP activation request includes at least the sidelink carrier frequency and the SL-BWP indexes. Feedback information of the base station may include two types of activation information and deactivation information.

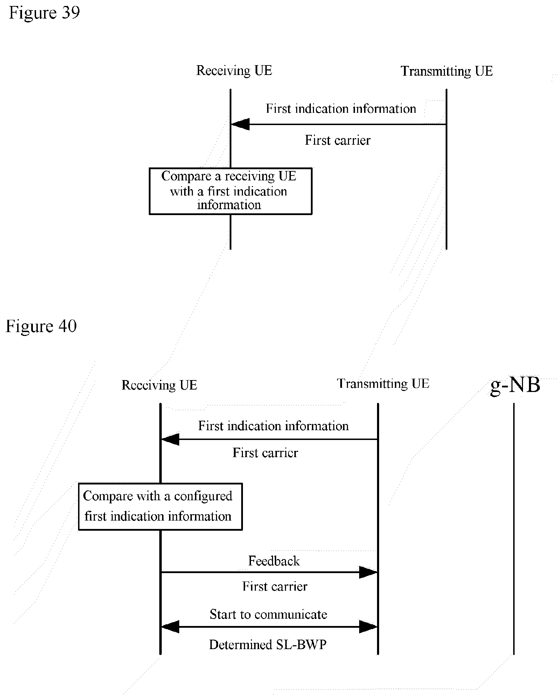

Figure 39 shows a process example with the base station. As shown in Figure 39, the transmitting UE sends the first indication information within the first carrier. Next, the receiving UE monitors the first indication information within the first carrier and decodes contents of the first indication information. According to cell identity information of the transmitting UE and the receiving UE, it is determined two cases that the receiving UE and the transmitting UE are in the same cell and the receiving UE and the transmitting UE are in different cells. As described above, according to the cell identity, it may be determined whether the transmitting UE and receiving UE belong to different cells or a same cell. In a case that the transmitting UE and the receiving UE belong to the same cell without the base station, the configuration mode is the same as the configuration mode without the base station in the above UE-specific case. For the case that the transmitting UE and the receiving UE belong to different cells, the configuration mode is the same as the configuration mode with the base station in the above UE-specific case.

A process of SL-BWP coordination between UE in different cells is the same as the process of SL-BWP coordination in the case of the UE-specific. The repeated description is omitted herein.

For a process of SL-BWP coordination between UE in the same cell, the receiving UE may determine the following two cases by the sidelink carrier information in the first indication information. The receiving UE configures the related sidelink carrier, and the SL-BWP indicated in the first indication information is activated within the related carrier. The receiving UE does not configure the related sidelink carrier, or the SL-BWP indicated in the first indication information is not activated within the related carrier.

Figure 40 shows a process example in the case that the transmitting UE configures the related sidelink carrier. As shown in Figure 40, the transmitting UE feeds back the SL-BWP configuration completion information within the first carrier. The transmitting UE and the receiving UE start to communicate on the determined SL-BWP.

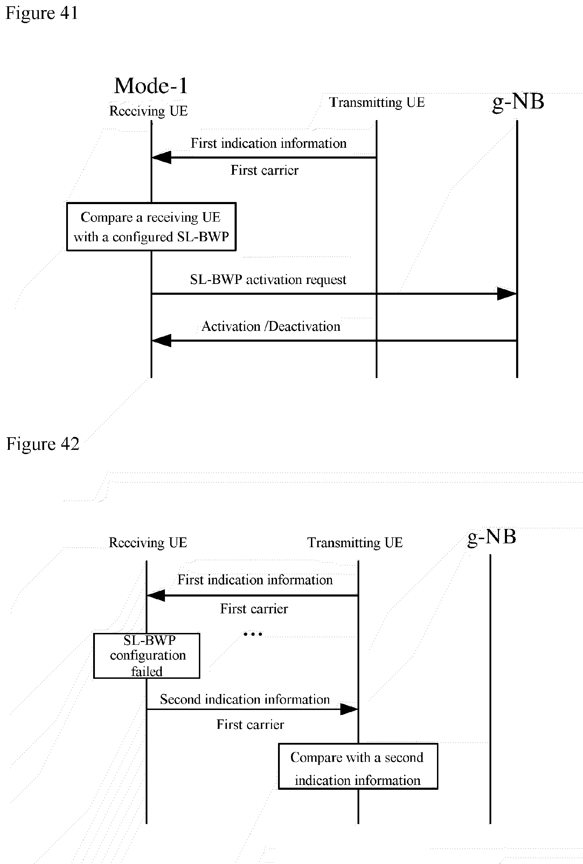

Figure 41 shows a process example in the case that the related sidelink carrier is not configured. As shown in Figure 41, the receiving UE in the MODE-1 sends, to the base station, the SL-BWP activation request. According to the sidelink carrier information in the SL-BWP and the SL-BWP indexes, the base station activates a SL-BWP within the related carrier for the UE. If the feedback information of the base station is the activation information, the receiving UE performs the subsequent operation. If the feedback information of the base station is the deactivation information, the receiving UE sends the second indication information. For the UE communication in the same cell, the SL-BWP activation request and the second indication information only include the carrier information and the SL-BWP indexes, and other parameters are optional. The base station configures SL-BWP for the UE according to the carrier information and the SL-BWP indexes.

Figure 42 shows a process example in which the transmitting UE receives the second indication information. As shown in Figure 42, the receiving UE sends the second indication information within the first carrier. The transmitting UE receives the first indication information within the first carrier and decodes the contents of the second indication information. The transmitting UE compares a SL-BWP configuration mode in the decoded second indication information with a configured SL-BWP configuration mode within the carrier, and comparison results may include the following two cases. One case is that the transmitting UE configures the related sidelink carrier, and the SL-BWP indicated in the second indication information is activated within the related carrier. The other case is that the transmitting UE does not configure the related sidelink carrier, or the SL-BWP indicated in the second indication information is not activated within the related carrier.

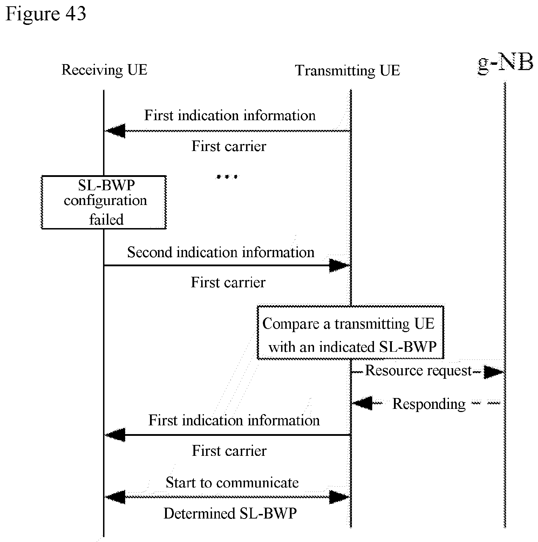

Figure 43 shows a process example in a case that the transmitting UE configures the related sidelink carrier. As shown in Figure 43, in the case that the transmitting UE uses the first indication information A with reference to Figure 15 described above, the transmitting UE adjusts information to transmit according to the second indication information, and sends, to the receiving UE, a new first indication information. After the receiving UE receives the new first indication information, communication starts. In the case that the transmitting UE uses the first indication information B with reference to Figure 16 described above, the transmitting UE adjusts information to transmit according to the second indication information. The UE in the MODE-1 sends, to the base station, the resource request information. If transmission resources are configured successfully, a new first indication information is sent to the receiving UE to start to communicate.

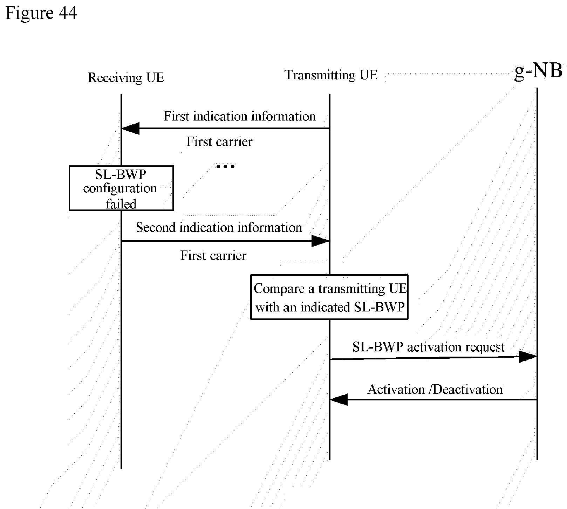

Figure 44 shows a process example in a case that the transmitting UE does not configure the related sidelink carrier. As shown in Figure 44, in the case that the transmitting UE uses the first indication information A with reference to Figure 15 described above, the transmitting UE in the MODE-1 sends, to the base station, the SL-BWP activation request. If the base station sends the configuration indication, the transmitting UE performs subsequent processing of the transmitting UE according to the SL-BWP activated by the base station. If the base station refuses the activation request and the SL-BWP within the first carrier meets the transmission service requirements, the transmitting UE configures the transmission on the SL-BWP within the first carrier. If the base station refuses the configuration request and the SL-BWP within the first carrier does not meet the transmission service requirements, the transmitting UE feeds back transmission end information to the receiving UE.

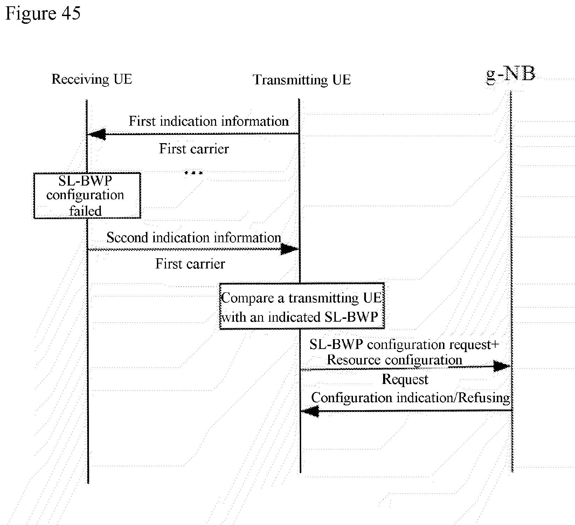

In a case that the transmitting UE uses the first indication information B with reference to Figure 16 described above, as shown in Figure 45, the transmitting UE in the MODE-1 sends, to the base station, the SL-BWP activation request and the resource configuration request. If the base station sends the activation instruction, the transmitting UE sends, to the receiving UE, a new first indication information according to the SL-BWP configured by the base station and resources, and the communication starts. If the base station refuses the activation request, and the base station indicates a new transmission resource for the transmitting UE on the SL-BWP within the first carrier, the transmitting UE configures the transmission on the SL-BWP within the first carrier. If the base station refuses the configuration request and the SL-BWP within the first carrier does not meet the transmission service requirements, the transmitting UE feeds back the transmission end information to the receiving UE.

The process without the base station is similar to that of the UE-specific, and the repeated description is omitted herein.

### 3. Zone-specific

The process in the case of the zone-pecific is similar to that in the case of the cell-pecific, with a difference that the cell identity information is changed to zone identity information. Another difference is that the transmitting UE or the receiving UE is in the Mode-2 with the base station.

### 4. Carrier-specific

For the Carrier-specific, the UE in the MODE-1 has the same plurality of SL-BWP configurations within the same carrier, and the UE in the MODE-2 has the same and only one SL-BWP configuration within the same carrier.

The Carrier-specific with the base station has the same process of the SL-BWP coordination as that in the same cell of cell-specific, with a difference is that there is no cell identity information in the first indication information/the second indication information. In addition, the case that the receiving UE is in the Mode-2 mode is added into the case "that is, the related sidelink carrier not configured" of the process in the receiving UE. In this case, the receiving UE sends, to the transmitting UE, the second indication information. The case that the transmitting UE is in the Mode-2 mode is added into the case "that is, the related sidelink carrier not configured" of the process in the transmitting UE. In this case, if the sending service on the SL-BWP within the first carrier meets the transmission requirements, the transmission is adjusted into the SL-BWP within the first carrier; and if the sending service on the SL-BWP within the first carrier does not meet the transmission requirements, the transmission end information is fed back.

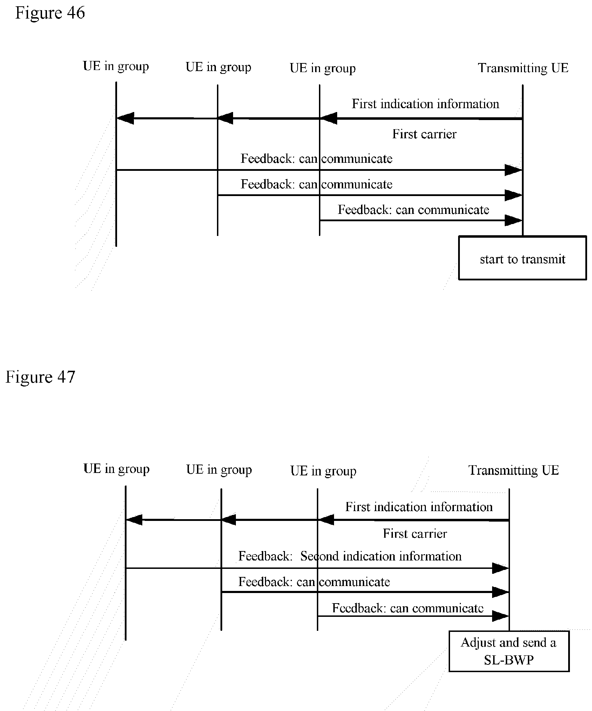

As described above, the embodiments of the present disclosure may further be applied to multicast communication. Next, upon not repeating the details described above, an example process of multicast communication with reference to Figures 46 and 47 is briefly described.

As shown in Figures 46 and 47, there are a plurality of UEs in a multicast group. If more than one receiving UE cannot configure the SL-BWP in the first indication information, the transmitting UE and the receiving UE that cannot configure the SL-BWP perform coordination according to the unicast communication process until the UE in the group has the same SL-BWP configuration within the given sidelink carrier, as shown in Figure 46.

In addition, the embodiments of the present disclosure may further be applied to the case of multi-carrier SL-BWP configuration. In this case, UE supports multi-carrier communication, each UE may configure no (0<n₀≤N₀) carriers. No represents a maximum number of a configurable carrier. Each carrier has a SL-BWP being capable of transmitting/receiving, and each UE has a first carrier configuration being capable of transmitting/receiving information on the sl-bwp within the first carrier.

Assuming the maximum number L of the carriers supported by the UE, the number may be configured by the system information, the RRC signaling, the location-based selection, pre-configuration and the like.

In addition, considering power limitation of the UE, it is assumed that the maximum number of the carriers supported by UE is set to M.

The maximum number of the carriers NO configurable by the UE is determined in the following manner.
If L≥m, then N0=M; and
If L<m, then NO = L.

It should be noted that above exemplary process is only illustrative and is not limiting.

In the above description for the device according to the embodiment of the present disclosure, some processes and methods are disclosed. Next, a wireless communication method according to an embodiment of the present disclosure is described without repeating the details described above.

As shown in Figure 2, the wireless communication method according to the embodiment of the present disclosure includes step S210 of receiving indication information from a first user equipment. The indication information is related to a sidelink bandwidth part SL-BWP for data transmission. The method further includes step S220 of performing, based on the indication information, an operation for performing sidelink communication with the first user equipment.

The wireless communication method according to the embodiment of the present disclosure may be implemented on a receiving UE side

In addition, the embodiment of the present disclosure further includes the device and method implemented on the above "transmitting UE" side. Next, the embodiment on the "transmitting UE" side is described without repeating the details described above.

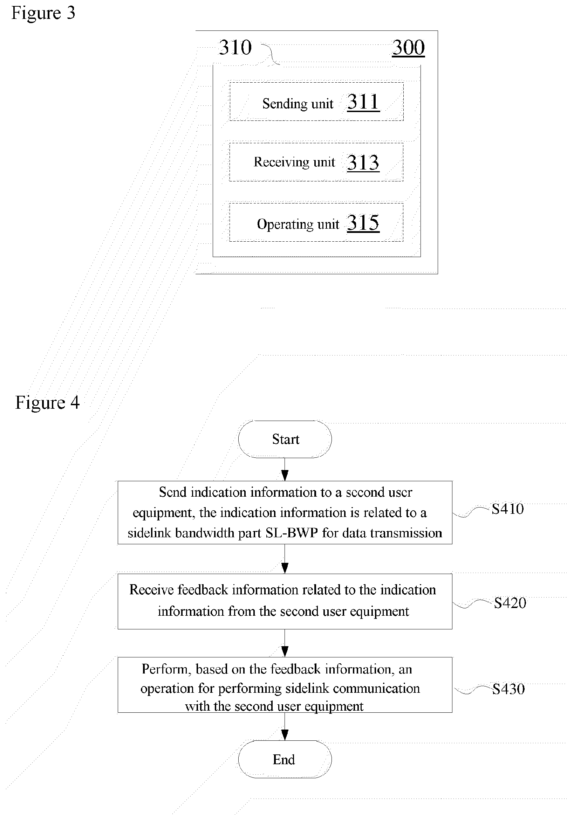

As shown in Figure 3, an electronic device 300 for wireless communication includes processing circuit 310. The processing circuit 310 includes a sending unit 311, a receiving unit 313 and an operating unit 315.

The sending unit 311 is configured to perform control to send indication information to a second user equipment, the indication information being related to a sidelink bandwidth part SL-BWP for data transmission.

The receiving unit 313 is configured to perform control to receive feedback information related to the indication information from the second user equipment.

The operating unit 315 is configured to perform, based on the feedback information, an operation for performing sidelink communication with the second user equipment.

According to an embodiment, the operating unit 315 is configured to control a current user equipment to perform sidelink communication with the second user equipment using the SL-BWP, upon the feedback information indicating that the second user equipment is capable of performing sidelink communication using the SL-BWP

According to an embodiment, the feedback information includes information related to a SL-BWP of the second user equipment, and the operating unit 315 is configured to determine, based on the feedback information and a SL-BWP configuration of a current user equipment, whether the current user equipment is capable of performing sidelink communication using a SL-BWP of the second user equipment.

The operating unit 315 is further configured to control the current user equipment to perform sidelink communication with the second user equipment using the SL-BWP of the second user equipment, upon determination of being capable of performing sidelink communication using the SL-BWP of the second user equipment.

The operating unit 315 is further configured to perform control to request, to a serving base station of the current user equipment, a SL-BWP corresponding to the SL-BWP of the second user equipment, upon determination of not being capable of performing sidelink communication using the SL-BWP of the second user equipment.

According to an embodiment, the indication information of the current user equipment is sent by a SL-BWP within a first carrier to the second user equipment, and the feedback information is received by the SL-BWP within the first carrier from the second user equipment.

The operating unit 315 is further configured to control the current user equipment to perform sidelink communication with the second user equipment using the SL-BWP within the first carrier, upon determination of not being capable of performing sidelink communication using the SL-BWP of the second user equipment.

Figure 4 shows a process example of a wireless communication method. As shown in Figure 4, the wireless communication method includes the following steps S410 to S430. In step S410, indication information is sent to a second user equipment, and the indication information is related to a sidelink bandwidth part SL-BWP for data transmission. In step S420, feedback information related to the indication information is received from the second user equipment. In step S430, based on the feedback information, an operation for performing sidelink communication with the second user equipment is performed.

In addition, the embodiment of the present disclosure further includes the device and the method that are implemented on the base station side. Next, the embodiment on the base station side is described without repeating the details described above.

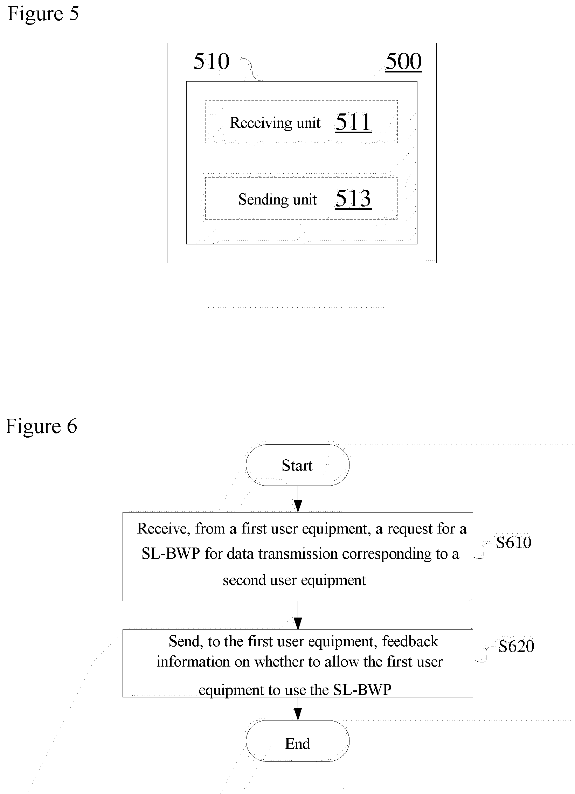

As shown in Figure 5, an electronic device 500 for wireless communication includes processing circuit 510. The processing circuit 510 includes a receiving unit 511, a sending unit 513. The electronic device 500 may be implemented, for example, on a base station side or a roadside device side.

The receiving unit 511 is configured to perform control to receive, from a first user equipment, a request for a sidelink bandwidth part SL-BWP for data transmission corresponding to a second user equipment.

The sending unit 513 is configured to perform control to send, to the first user equipment, feedback information on whether to allow the first user equipment to use the SL-BWP.

As shown in Figure 6, a wireless communication method includes the following steps S610 to S620. In step S610, a request for a sidelink bandwidth part SL-BWP for data transmission corresponding to a second user equipment is received from a first user equipment. In step S620, feedback information on whether to allow the first user equipment to use the SL-BWP is sent to the first user equipment.

In addition, a computer readable medium is further provided according to an embodiment of the present disclosure. The computer readable medium includes executable instructions, when executed by an information processing apparatus, cause the information processing apparatus to implement the above method.

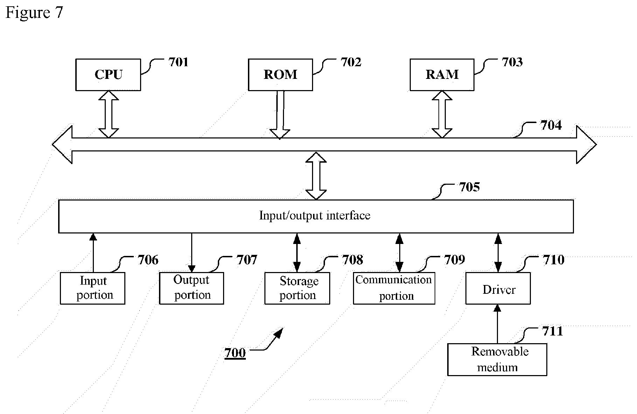

As an example, steps of the above-described method and composing modules and/or units of the above-described device may be implemented as software, firmware, hardware, or a combination thereof. In a case of implementing by software or firmware, a program constituting the software for implementing the above-described method may be installed from a storage medium or a network to a computer (for example, a general-purpose computer 700 shown in Figure 7) having a dedicated hardware structure. The computer can perform various functions when being installed with various programs.

In Figure 7, an arithmetic processing unit (i.e., a CPU) 701 performs various types of processing according to programs stored in a read only memory (ROM) 702 or programs loaded from a storage portion 708 to a random access memory (RAM) 703. Data required when the CPU 701 performs various types of processing is stored in the RAM 703 as needed. The CPU 701, the ROM 702 and the RAM 703 are linked to each other via a bus 704. An input/output interface 705 is also linked to the bus 704.

The following components are linked to the input/output interface 705: an input portion 706 (including a keyboard, a mouse or the like), an output portion 707 (including a display such as a cathode ray tube (CRT), a liquid crystal display (LCD), a speaker or the like), a storage portion 708 (including a hard disk or the like), and a communication portion 709 (including a network interface card such as a LAN card, a modem or the like). The communication portion 709 performs communication processing via a network such as the Internet. A driver 710 may also be linked to the input/output interface 705 as needed. A removable medium 711 such as a magnetic disk, an optical disk, a magneto-optical disk and a semiconductor memory may be installed on the driver 710 as needed, such that the computer programs read from the removable medium 711 are installed in the storage portion 708 as needed.

In a case that the series of processing described above is implemented by software, programs constituting the software are installed from a network such as the Internet or a storage medium such as the removable medium 711.

Those skilled in the art should understand that the storage medium is not limited to the removable medium 711 shown in Figure 7 in which programs are stored and which is distributed separately from the apparatus to provide the programs to the user. An example of the removable medium 711 includes: a magnetic disk (including a floppy disk (registered trademark)), an optical disk (including a compact disk read only memory (CD-ROM) and a digital versatile disk (DVD)), a magneto-optical disk (including a mini-disk (MD) (registered trademark)) and a semiconductor memory. Alternatively, the storage medium may be the ROM 702, a hard disk included in the storage portion 708 or the like. The programs are stored in the storage medium, and the storage medium is distributed to the user together with the device including the storage medium.

According to an embodiment of the present disclosure, a program product storing machine-readable instruction codes is further provided. When read and executed by a machine, the instruction codes cause the machine to perform the above-described method according to the embodiment of the present disclosure.

Accordingly, a storage medium for carrying the above-described program product storing the machine-readable instruction codes is also included in the present disclosure. The storage medium includes, but not limited to, a floppy disk, an optical disk, a magneto-optical disk, a storage card, a memory stick or the like.

The embodiments of the present disclosure further relate to an electronic device in the following. In a case that the electronic device is for base station side, the electronic device may be implemented as any type of evolution Node B (eNB), such as a macro eNB and a small eNB. The small eNB may be an eNB covering a cell smaller than a macro cell, such as a pico eNB, a micro eNB or a home (femto) eNB. Alternatively, the base station may be implemented as any other type of base station, such as a NodeB and a base transceiver station (BTS). The electronic device may include: a main body (also referred to as a base station apparatus) configured to control wireless communication; and one or more remote radio heads (RRH) arranged at positions different from the main body. In addition, various types of terminals described below may operate as a base station by performing functions of the base station temporarily or in a semi-persistent manner.

In a case that the electronic device is for user equipment side, the electronic device may be implemented as mobile terminals (such as a smart phone, a tablet personal computer (PC), a notebook PC, a portable game terminal, a portable/dongle mobile router and a digital camera) or a vehicle terminal (such as a car navigation apparatus). In addition, the electronic device may be a wireless communication module (such as an integrated circuit module including one or more chips) installed on each of the above terminals.

### [Application Example On Terminal Apparatus]

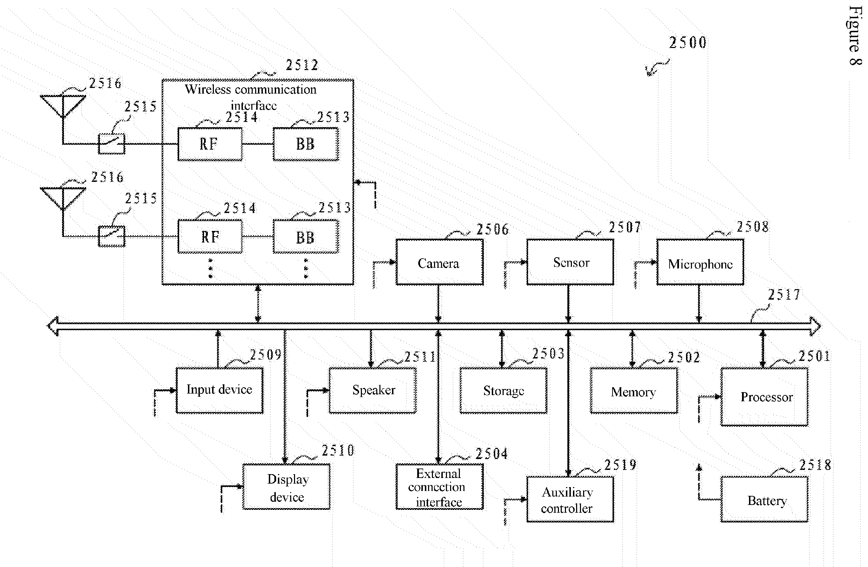

Figure 8 is a block diagram showing a schematic configuration example of a smart phone 2500 to which the technology of the present disclosure may be applied. The smart phone 2500 includes a processor 2501, a memory 2502, a storage 2503, an external connection interface 2504, a camera 2506, a sensor 2507, a microphone 2508, an input device 2509, a display device 2510, a speaker 2511, a wireless communication interface 2512, one or more antenna switches 2515, one or more antennas 2516, a bus 2517, a battery 2518, and an auxiliary controller 2519.

The processor 2501 may be, for example, a CPU or a system on a chip (SoC), and controls functions of an application layer and another layer of the smart phone 2500. The memory 2502 includes RAM and ROM, and stores a program executed by the processor 2501 and data. The storage 2503 may include a storage medium such as a semiconductor memory and a hard disk. The external connection interface 2504 is an interface for connecting an external apparatus (such as a memory card and a universal serial bus (USB) apparatus) to the smart phone 2500.

The camera 2506 includes an image sensor (such as a charge coupled device (CCD) and a complementary metal oxide semiconductor (CMOS)), and generates a captured image. The sensor 2507 may include a group of sensors such as a measurement sensor, a gyro sensor, a geomagnetic sensor, and an acceleration sensor. The microphone 2508 converts sounds that are inputted to the smart phone 2500 to audio signals. The input device 2509 includes, for example, a touch sensor configured to detect touch onto a screen of the display device 2510, a keypad, a keyboard, a button, or a switch, and receive an operation or information inputted from a user. The display device 2510 includes a screen (such as a liquid crystal display (LCD) and an organic light-emitting diode (OLED) display), and displays an output image of the smart phone 2500. The speaker 2511 converts audio signals that are outputted from the smart phone 2500 to sounds.

The wireless communication interface 2512 supports any cellular communication scheme (such as LTE and LTE-Advanced), and performs wireless communication. The wireless communication interface 2512 may typically include, for example, a base band (BB) processor 2513 and a radio frequency (RF) circuit 2514. The BB processor 2513 may perform, for example, encoding/decoding, modulating/demodulating, and multiplexing/demultiplexing, and performs various types of signal processing for wireless communication. Meanwhile, the RF circuit 2514 may include, for example, a mixer, a filter, and an amplifier, and transmits and receives wireless signals via the antenna 2516. The wireless communication interface 2512 may be a chip module having the BB processor 2513 and the RF circuit 2514 integrated thereon. As shown in Figure 8, the wireless communication interface 2512 may include a plurality of BB processors 2513 and a plurality of RF circuits 2514. Although Figure 8 shows the example in which the wireless communication interface 2512 includes the plurality of BB processors 2513 and the plurality of RF circuits 2514, the wireless communication interface 2512 may also include a single BB processor 2513 or a single RF circuit 2514.

Furthermore, in addition to a cellular communication scheme, the wireless communication interface 2512 may support another type of wireless communication scheme such as a short-distance wireless communication scheme, a near field communication scheme, and a wireless local area network (LAN) scheme. In this case, the wireless communication interface 2512 may include the BB processor 2513 and the RF circuit 2514 for each wireless communication scheme.

Each of the antenna switches 2515 switches connection destinations of the antennas 2516 among a plurality of circuits (such as circuits for different wireless communication schemes) included in the wireless communication interface 2512.

Each of the antennas 2516 includes a single or a plurality of antenna elements (such as a plurality of antenna elements included in an MIMO antenna), and is used for the wireless communication interface 2512 to transmit and receive wireless signals. As shown in Figure 8, the smart phone 2500 may include the plurality of antennas 2516. Although Figure 8 shows the example in which the smart phone 2500 includes the plurality of antennas 2516, the smart phone 2500 may also include a single antenna 2516.

Furthermore, the smart phone 2500 may include the antenna 2516 for each wireless communication scheme. In this case, the antenna switches 2515 may be omitted from the configuration of the smart phone 2500.

The bus 2517 connects the processor 2501, the memory 2502, the storage 2503, the external connection interface 2504, the camera 2506, the sensor 2507, the microphone 2508, the input device 2509, the display device 2510, the speaker 2511, the wireless communication interface 2512, and the auxiliary controller 2519 to each other. The battery 2518 supplies power to blocks of the smart phone 2500 shown in Figure 8 via feeder lines that are partially shown as dashed lines in the Figure 8. The auxiliary controller 2519 operates a minimum necessary function of the smart phone 2500, for example, in a sleep mode.

In the smart phone 2500 shown in Figure 8, the transceiving device in the information processing apparatus for user equipment side according to the embodiment of the present disclosure may be implemented by the wireless communication interface 2512. At least part of functions of the processing circuit and/or the units in the electronic device or the information processing apparatus for user equipment side according to the embodiment of the present disclosure may also be implemented by the processor 2501 or the auxiliary controller 2519. For example, the power consumption of the battery 2518 may be reduced by the auxiliary controller 2519 performing part of the functions of the processor 2501. In addition, the processor 2501 or the auxiliary controller 2519 may execute at least part of the functions of the processing circuit and/or the units in the electronic device or the information processing apparatus for user equipment side according to the embodiment of the present disclosure by executing the programs stored in the memory 2502 or the storage 2503.

### [Application Example On Base Station]

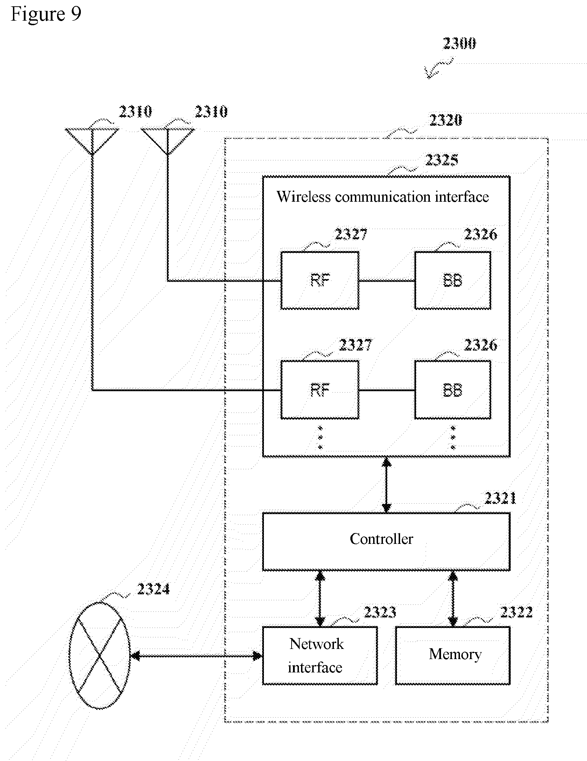

Figure 9 is a block diagram showing a schematic configuration example of a gNB to which the technology of the present disclosure may be applied. An eNB 2300 includes one or more antennas 2310 and a base station apparatus 2320. The base station apparatus 2320 and each antenna 2310 may be connected to each other via an RF cable.

Each of the antennas 2310 includes a single or plurality of antenna elements (such as plurality of antenna elements included in a multi-input multi-output (MIMO) antenna), and is used for the base station apparatus 2320 to transmit and receive wireless signals. As shown in Figure 9, the gNB 2300 may include the plurality of antennas 2310. For example, the plurality of antennas 2310 may be compatible with plurality of frequency bands used by the gNB 2300. Although Figure 9 shows the example in which the gNB 2300 includes the plurality of antennas 2310, the gNB 2300 may also include a single antenna 2310.

The base station apparatus 2320 includes a controller 2321, a memory 2322, a network interface 2323, and a wireless communication interface 2325.

The controller 2321 may be, for example, a CPU or a DSP, and operates various functions of a higher layer of the base station apparatus 2320. For example, the controller 2321 generates a data packet from data in signals processed by the wireless communication interface 2325, and transfers the generated packet via the network interface 2323. The controller 2321 may bundle data from a plurality of base band processors to generate the bundled packet, and transfer the generated bundled packet. The controller 2321 may have logical functions of performing control such as radio resource control, radio bearer control, mobility management, admission control and scheduling. The control may be performed in corporation with an gNB or a core network node in the vicinity. The memory 2322 includes a RAM and a ROM, and stores a program executed by the controller 2321, and various types of control data (such as a terminal list, transmission power data, and scheduling data).

The network interface 2323 is a communication interface for connecting the base station apparatus 2320 to a core network 2324. The controller 2321 may communicate with a core network node or another gNB via the network interface 2323. In this case, the gNB 2300, and the core network node or the other gNB may be connected to each other via a logical interface (such as an S1 interface and an X2 interface). The network interface 2323 may also be a wired communication interface or a wireless communication interface for wireless backhaul. If the network interface 2323 is a wireless communication interface, the network interface 2323 may use a higher frequency band for wireless communication than a frequency band used by the wireless communication interface 2325.

The wireless communication interface 2325 supports any cellular communication scheme (such as Long Term Evolution (LTE) and LTE-Advanced), and provides wireless connection to a terminal positioned in a cell of the gNB 2300 via the antenna 2310. The wireless communication interface 2325 may typically include, for example, a BB processor 2326 and an RF circuit 2327. The BB processor 2326 may perform, for example, encoding/decoding, modulating/demodulating, and multiplexing/demultiplexing, and performs various types of signal processing of layers (such as LI, medium access control (MAC), wireless link control (RLC), and a packet data convergence protocol (PDCP)). The BB processor 2326 may have a part or all of the above-described logical functions instead of the controller 2321. The BB processor 2326 may be a memory that stores a communication control program, or a module that includes a processor and a related circuit configured to execute the program. Updating the program may allow the functions of the BB processor 2326 to be changed. The module may be a card or a blade that is inserted into a slot of the base station apparatus 2320. Alternatively, the module may also be a chip that is mounted on the card or the blade. Meanwhile, the RF circuit 2327 may include, for example, a mixer, a filter, and an amplifier, and transmits and receives wireless signals via the antenna 2310.

As shown in Figure 9, the wireless communication interface 2325 may include the plurality of BB processors 2326. For example, the plurality of BB processors 2326 may be compatible with a plurality of frequency bands used by the gNB 2300. As shown in Figure 9, the wireless communication interface 2325 may include the plurality of RF circuits 2327. For example, the plurality of RF circuits 2327 may be compatible with a plurality of antenna elements. Although Figure 9 shows the example in which the wireless communication interface 2325 includes the plurality of BB processors 2326 and the plurality of RF circuits 2327, the wireless communication interface 2325 may also include a single BB processor 2326 or a single RF circuit 2327.

In the gNB 2300 shown in Figure 9, the transceiving device of the wireless communication apparatus at the base station side according to the embodiment of the present disclosure may be implemented by the wireless communication interface 2512. At least a part of the functions of the processing circuit and/or each unit of the electronic device or the wireless communication apparatus at the base station side according to the embodiment of the present disclosure may also be implemented by the controller 2321. For example, the controller 2321 may perform, by executing a program stored in the memory 2322, at least part of the functions of the processing circuit and/or each unit of the electronic device or the wireless communication apparatus at the base station side according to the embodiment of the present disclosure.

### [Application Example On Car Navigation Device]

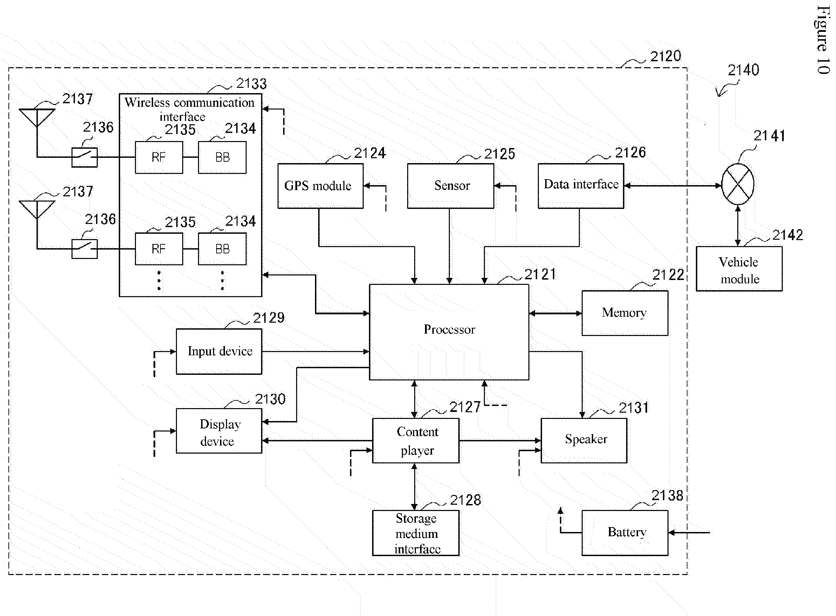

Figure 10 is a block diagram showing a schematic configuration example of a car navigation device 2120 in which the technology of the disclosure can be applied. The car navigation device 2120 includes a processor 2121, a memory 2122, a global positioning system (GPS) module 2124, a sensor 2125, a data interface 2126, a content player 2127, a storage medium interface 2128, an input device 2129, a display device 2130, a speaker 2131, a radio communication interface 2133, one or more antenna switch 2136, one or more antenna 2137 and a battery 2138.

The processor 2121 may be for example the CPU or the SoC, and control the functions of the application layer and another layer of the car navigation device 2120. The memory 2122 includes RAM and ROM, and stores a program that is executed by the processor 2121, and data.

The GPS module 2124 determines a position (such as latitude, longitude, and altitude) of the car navigation device 1420 by using GPS signals received from a GPS satellite. The sensor 2125 may include a set of sensors, such as a gyro sensor, a geomagnetic sensor, and an air pressure sensor. The data interface 2126 is connected to, for example, an in-vehicle network 2141 via a terminal that is not shown, and acquires data generated by the vehicle, such as vehicle speed data.

The content player 2127 reproduces content stored in a storage medium (such as a CD and a DVD) that is inserted into the storage medium interface 2128. The input device 2129 includes, for example, a touch sensor configured to detect touch onto a screen of the display device 2130, a button or a switch, and receives an operation or information inputted from a user. The display device 2130 includes a screen such as an LCD or an OLED display, and displays an image of the navigation function or content that is reproduced. The speaker 2131 outputs sound of the navigation function or the content that is reproduced.

The wireless communication interface 2133 supports any cellular communication scheme (such as LTE and LTE-Advanced), and performs wireless communication. The wireless communication interface 2133 may typically include, for example, a BB processor 2134 and an RF circuit 2135. The BB processor 2134 may perform, for example, encoding/decoding, modulating/demodulating, and multiplexing/demultiplexing, and performs various types of signal processing for wireless communication. Meanwhile, the RF circuit 2135 may include, for example, a mixer, a filter, and an amplifier, and transmits and receives wireless signals via the antenna 2137. The wireless communication interface 2133 may also be a chip module having the BB processor 2134 and the RF circuit 2135 integrated thereon. As shown in Figure 21, the wireless communication interface 2133 may include the plurality of BB processors 2134 and the plurality of RF circuits 2135. Although Figure 21 shows the example in which the wireless communication interface 2133 includes the plurality of BB processors 2134 and the plurality of RF circuits 2135, the wireless communication interface 2133 may also include a single BB processor 2134 or a single RF circuit 2135.

Furthermore, in addition to the cellular communication scheme, the wireless communication interface 2133 may support another type of wireless communication scheme such as a short-distance wireless communication scheme, a near field communication scheme, and a wireless LAN scheme. In this case, the wireless communication interface 2133 may include the BB processor 2134 and the RF circuit 2135 for each wireless communication scheme.

Each of the antenna switches 2136 switches connection destinations of the antennas 2137 among a plurality of circuits (such as circuits for different wireless communication schemes) included in the wireless communication interface 2133.

Each of the antennas 2137 includes a single or a plurality of antenna elements (such as a plurality of antenna elements included in an MIMO antenna), and is used for the wireless communication interface 2133 to transmit and receive wireless signals. As shown in Figure 10, the car navigation apparatus 2120 may include the plurality of antennas 2137. Although Figure 10 shows the example in which the car navigation apparatus 2120 includes the plurality of antennas 2137, the car navigation apparatus 2120 may also include a single antenna 2137.

Furthermore, the car navigation apparatus 2120 may include the antenna 2137 for each wireless communication scheme. In this case, the antenna switches 2136 may be omitted from the configuration of the car navigation apparatus 2120.

The battery 2138 supplies power to blocks of the car navigation apparatus 2120 shown in Figure 10 via feeder lines that are partially shown as dashed lines in the Figure 10. The battery 2138 accumulates power supplied from the vehicle.

In the car navigation apparatus 2120 shown in Figure 10, the transceiving device or the transceiving unit in the information processing apparatus for user equipment side according to the embodiment of the present disclosure may be implemented by the wireless communication interface 2133. At least part of functions of the processing circuit and/or the units in the electronic device or the information processing apparatus for user equipment side according to the embodiment of the present disclosure may also be implemented by the processor 2121.

The technology of the present disclosure may also be implemented as an in-vehicle system (or a vehicle) 2140 including one or more blocks of the car navigation apparatus 2120, the in-vehicle network 2141 and a vehicle module 2142. The vehicle module 2142 generates vehicle data (such as a vehicle speed, an engine speed or failure information), and outputs the generated data to the in-vehicle network 2141.

In the above description of specific embodiments of the present disclosure, the features described and/or illustrated with respect to one embodiment may be used in one or more other embodiments in the same or similar manner, may be combined with features in other embodiments, or may replace features in other embodiments.

It should be noted that the term "comprising/including" as used herein refers to the presence of a feature, element, step, or component, but does not exclude the presence or addition of one or more other features, elements, steps or components.

In the above embodiments and examples, reference numerals consist of numerals are used to represent steps and/or units. It should be understood by those skill in the art that the reference numerals are used only for facilitating description and illustration and are not intended to represent an order or limit in any other manner.

In addition, the method of the present disclosure is not limited to be performed in a chronological order described in the specification, but may also be performed in other chronological order, in parallel or independently. Therefore, the order for executing the method described in this specification does not limit the technical scope of the present disclosure.

Although the present disclosure has been described by specific embodiments according to the present disclosure, it should be understood that all of the embodiments and examples described above are illustrative and not restrictive. Various modifications, improvements or equivalents of the present disclosure may be designed by those skilled in the art from the spirit and the scope of the appended claims. Such modifications, improvements or equivalents shall be construed as being included within the scope of protection of the present disclosure.

## Claims

1. An electronic device for wireless communication, comprising a processing circuit configured to:
perform control to receive indication information from a first user equipment, the indication information being related to a sidelink bandwidth part SL-BWP for data transmission; and
perform, based on the indication information, an operation for performing sidelink communication with the first user equipment.

2. The electronic device according to claim 1, wherein the operation comprises:
determining, based on the indication information and a SL-BWP configuration of a current user equipment, whether the current user equipment is capable of performing sidelink communication using a SL-BWP of the first user equipment.

3. The electronic device according to claim 2, wherein the operation further comprises:
controlling the current user equipment to perform sidelink communication with the first user equipment using the SL-BWP of the first user equipment, upon determination of being capable of performing sidelink communication using the SL-BWP of the first user equipment.

4. The electronic device according to claim 2, wherein the operation further comprises:
performing control to send information related to the SL-BWP of the current user equipment to the first user equipment, upon determination of not being capable of performing sidelink communication using the SL-BWP of the first user equipment.

5. The electronic device according to claim 2, wherein the operation further comprises:
performing control to request, to a serving base station of the current user equipment, a SL-BWP corresponding to the SL-BWP of the first user equipment, upon determination of not being capable of performing sidelink communication using the SL-BWP of the first user equipment.

6. The electronic device according to claim 4, wherein the processing circuit is configured to:
receive the indication information from the first user equipment by a SL-BWP within a first carrier; and/or
send the information related to the SL-BWP of the current user equipment by the SL-BWP within the first carrier.

7. The electronic device according to claim 6, wherein the operation further comprises:
performing control to perform sidelink communication with the first user equipment using the SL-BWP within the first carrier, upon determination of not being capable of performing sidelink communication using the SL-BWP of the first user equipment.

8. The electronic device according to claim 6, wherein the SL-BWP within the first carrier is shared by a plurality of user equipment.

9. The electronic device according to claim 6, wherein the SL-BWP within the first carrier is configured by one or more of:
system information;
radio resource control signaling;
geographic location-based selection; and
pre-configuration.

10. The electronic device according to any one of claims 1 to 9, wherein the indication information comprises configuration information of the SL-BWP.

11. The electronic device according to claim 10, wherein the configuration information comprises a subcarrier spacing, a cyclic prefix, a physical resource block offset and a bandwidth of the SL-BWP.

12. The electronic device according to claim 11, wherein the configuration information further comprises SL-BWP indexes and effective time of the SL-BWP.

13. The electronic device according to claim 10, wherein the configuration information is configured by one or more of:
system information;
radio resource control signaling;
geographic location-based selection; and
pre-configuration.

14. The electronic device according to claim 10, wherein the configuration information is UE-specific, Cell-specific, Zone-specific or Carrier-specific.

15. The electronic device according to claim 10, wherein two or more SL-BWPs are configured within each sidelink carrier, and one of the two or more SL-BWPs is activated.

16. The electronic device according to any one of claims 1 to 9, wherein the first user equipment comprises a vehicle.

17. A wireless communications method, comprising:
receiving indication information from a first user equipment, the indication information being related to a sidelink bandwidth part SL-BWP for data transmission; and
performing, based on the indication information, an operation for performing sidelink communication with the first user equipment.

18. An electronic device for wireless communication, comprising a processing circuit configured to:
perform control to send indication information to a second user equipment, the indication information being related to a sidelink bandwidth part SL-BWP for data transmission; and
perform control to receive feedback information related to the indication information from the second user equipment; and
perform, based on the feedback information, an operation for performing sidelink communication with the second user equipment.

19. The electronic device according to claim 18, wherein the operation comprises: controlling a current user equipment to perform sidelink communication with the second user equipment using the SL-BWP, upon the feedback information indicating that the second user equipment is capable of performing sidelink communication using the SL-BWP.

20. The electronic device according to claim 18, wherein the feedback information comprises information related to a SL-BWP of the second user equipment, and the operation comprises:
determining, based on the feedback information and a SL-BWP configuration of a current user equipment, whether the current user equipment is capable of performing sidelink communication using a SL-BWP of the second user equipment.

21. The electronic device according to claim 20, wherein the operation comprises:
controlling the current user equipment to perform sidelink communication with the second user equipment using the SL-BWP of the second user equipment, upon determination of being capable of performing sidelink communication using the SL-BWP of the second user equipment.

22. The electronic device according to claim 20, wherein the operation comprises:
performing control to request, to a serving base station of the current user equipment, a SL-BWP corresponding to the SL-BWP of the second user equipment, upon determination of not being capable of performing sidelink communication using the SL-BWP of the second user equipment.

23. The electronic device according to claim 20, wherein the processing circuit is configured to:
send, to the second user equipment, the indication information of the current user equipment by a SL-BWP within a first carrier; and/or
receive the feedback information from the second user equipment by the SL-BWP within the first carrier.

24. The electronic device according to claim 23, wherein the operation comprises:
controlling the current user equipment to perform sidelink communication with the second user equipment using the SL-BWP within the first carrier, upon determination of not being capable of performing sidelink communication using the SL-BWP of the second user equipment.

25. A wireless communications method, comprising:
sending, to a second user equipment, indication information, the indication information being related to a sidelink bandwidth part SL-BWP for data transmission;
receiving feedback information related to the indication information from the second user equipment; and
performing, based on the feedback information, an operation for performing sidelink communication with the second user equipment.

26. An electronic device for wireless communication, comprising a processing circuit configured to:
perform control to receive, from a first user equipment, a request for a sidelink bandwidth part SL-BWP for data transmission corresponding to a second user equipment; and
perform control to send, to the first user equipment, feedback information on whether to allow the first user equipment to use the SL-BWP.

27. The electronic device according to claim 26 implemented on a base station side or a roadside device side.

28. A wireless communications method, comprising:
receiving, from a first user equipment, a request for a sidelink bandwidth part SL-BWP for data transmission corresponding to a second user equipment; and
sending, to the first user equipment, feedback information on whether to allow the first user equipment to use the SL-BWP

29. A computer readable medium comprising executable instructions that, when executed by an information processing apparatus, cause the information processing apparatus to implement the method according to claim 17, 25 or 28.
